# EUROPÄISCHE PATENTSCHRIFT

(11) **EP 2 229 586 B1**
(45) Veröffentlichungstag und Bekanntmachung des Hinweises auf die Patenterteilung: **01.08.2012**
(21) Anmeldenummer: 08870425.9
(22) Anmeldetag: 23.12.2008
(51) Int. Cl.: G01N 29/26, G01N 29/06, G01N 29/44, G01N 29/30

(54) **VERFAHREN FÜR DIE ZERSTÖRUNGSFREIE PRÜFUNG EINES PRÜFLINGS MITTELS ULTRASCHALL SOWIE VORRICHTUNG HIERZU**
METHOD FOR THE NON-DESTRUCTIVE TESTING OF A TEST OBJECT USING ULTRASOUND, AND APPARATUS THEREFOR
PROCÉDÉ POUR LE CONTRÔLE NON DESTRUCTIF D'UN ÉCHANTILLON PAR ULTRASONS ET DISPOSITIF À CETTE FIN

(30) Priorität: 04.01.2008 DE 102008003257; 11.04.2008 DE 102008018648; 18.04.2008 DE 102008019778; 16.06.2008 DE 102008002445
(43) Veröffentlichungstag der Anmeldung: 22.09.2010
(73) Patentinhaber: GE Inspection Technologies GmbH, 50354 Hürth (DE)
(72) Erfinder: OBERDÖRFER, York, 40764 Langenfeld (DE); KLEINERT, Wolf-Dietrich, 53125 Bonn (DE)
(74) Vertreter: Bauer Vorberg Kayser Patentanwälte
(86) Internationale Anmeldenummer: PCT/EP2008/068236
(87) Internationale Veröffentlichungsnummer: WO 2009/087065

(56) Entgegenhaltungen:
- DE-A1- 2 335 567
- DE-A1- 2 901 818
- US-A1- 2006 219 013
- BOHN H ET AL: "Apparative developments for in-service inspections of reactor pressure vessels" NUCLEAR ENGINEERING AND DESIGN, AMSTERDAM, NL, Bd. 102, Nr. 3, 1. Januar 1987 (1987-01-01), Seiten 341-355, XP002448121 ISSN: 0029-5493
- GROHS B ET AL: "CHARACTERIZATION OF FLAW LOCATION, SHAPE, AND DIMENSIONS WITH THE ALOK SYSTEM" MATERIALS EVALUATION, COLUMBUS, OH, US, Bd. 40, Nr. 1, 1. Januar 1982 (1982-01-01), Seiten 84-89, XP009030157 ISSN: 0025-5327
- DEUTSCH V ET AL: "3.4 Fehlernachweis und Gerätejustierung" ULTRASCHALLPRUEFUNG: GRUNDLAGEN UND INDUSTRIELLE ANWENDUNGEN, XX, XX, 1. Januar 1997 (1997-01-01), Seiten 80-145, XP002301049

## Beschreibung

Gegenstand der vorliegenden Erfindung ist ein Verfahren für die zerstörungsfreie Prüfung eines Prüflings mittels Ultraschall, wobei im Rahmen des Verfahrens eine Ersatzreflektorgröße für einen im Volumen des Prüflings befindlichen Fehler aus den Ultraschallechosignalen, die im Rahmen des Verfahrens aufgenommen werden, ermittelt wird. Weiterhin ist Gegenstand der vorliegenden Erfindung eine Vorrichtung, die zur Durchführung des erfindungsgemäßen Verfahrens geeignet ist.

Gattungsgemäße Verfahren sind aus dem Stand der Technik wohl bekannt. Aus der Veröffentlichung US 2006/0219013 ist eine zerstörungsfreie Ultraschallprüfung bekannt mit einer Fehlerbestimmung aus Echosignalen für eine Mehrzahl von Einschallwinkeln und anschließender Darstellung des Fehlers als Sektor-Scan. Ein mittels eines Impuls-Echo-Verfahrens basierend auf der Einschallung von gepulsten Ultraschall in einen Prüfling aufgefundener Fehler im Volumen des Prüflings, beispielsweise ein Lunker, ein Einschluss oder auch ein Riss, werden charakterisiert durch die Angabe eines Wertes für seine Ersatzreflektorgröße ERG (engl. ERS "equivalent reflector size"). Der Wert dieser Ersatzreflektorgröße wird bestimmt durch einen Vergleich der Amplitude der Echosignale, welche vom untersuchten Fehler im Volumen des Prüflings herrühren, mit einem modellhaften Vergleichsfehler bekannter Größe. In der so genannten Vergleichskörpermethode vergleicht der Prüfer die Echosignale des untersuchten Prüflings mit Echosignalen, die er an einem dem Prüfling äquivalenten Vergleichskörper gewinnt, in den ein oder mehrere Vergleichsreflektoren eingebracht sind. Hierzu können beispielsweise zylindrische Bohrungen mit bekannten Abmessungen in den Vergleichskörper eingebracht werden. Die bei einer Ultraschall-Reflektion an der Bohrung auftretenden Echosignale werden dann mit den Echosignalen, welche bei einer Untersuchung des Prüflings gewonnen werden, verglichen. Bei der Vergleichskörpermethode nimmt der Prüfer daher mit einem geeigneten Prüfkopf, bei dem es sich beispielsweise um einen geeigneten Winkelprüfkopf handeln kann, Messungen sowohl am zu untersuchenden Prüfling als auch am präparierten Vergleichskörper vor.

Bei der sogenannten AVG-Methode hingegen wird die Amplitude des von einem Fehler im Volumen des Prüflings resultierenden Echosignals verglichen mit einem theoretisch berechneten und/oder empirisch ermittelten Echosignal eines modellhaften Referenzfehlers, der in der Regel als ebene Kreisscheibe angenommen wird und der sich in der gleichen Tiefe im Prüfling befindet wie der bei der durchgeführten Prüfung des Prüflings aufgefundene Fehler. Hierzu wird für den bei der Prüfung verwendeten Prüfkopf im Vorfeld ein so genanntes AVG-Diagramm erstellt, welches die Charakteristik des Prüfkopfs beinhaltet. Die im AVG-Diagramm enthaltenen Kurven geben die Echohöhe an, die ein Referenzfehler bei einer Vermessung mit dem verwendeten Prüfkopf erzeugen würde. Bei einer praktischen Prüfaufgabe kann der Prüfer dann die Ersatzreflektorgröße des detektierten Fehlers im Volumen des Prüflings unter Vornahme der Schallschwächungskorrektur (Material-spezifische Schallschwächung) und Transferkorrektur (Prüfling-spezifische Ankoppelverluste) für den Prüfling unmittelbar aus dem AVG-Diagramm ablesen.

Bei einem klassischen Prüfverfahren gemäß der AVG-Methode variiert der Prüfer die Prüfkopfposition und Orientierung relativ zum aufgefundenen Fehler und versucht, hierdurch das resultierende Echosignal zu maximieren. Dieser Vorgang wird bei der Werkstoffprüfung mittels Ultraschall auch als "Züchten" des Ultraschallsignals bezeichnet. Die tatsächliche Bestimmung der Ersatzreflektorgröße des aufgefundenen Fehlers erfolgt dann für das maximierte Ultraschallecho.

Weitere Details zur AVG-Methode ergeben sich beispielsweise aus der Patentschrift US 5,511,425 A, die auf die Rechtsvorgängerin der Anmelderin zurückgeht. Weiterhin wird die AVG-Methode detailliert beschrieben im Buch "Werkstoffprüfung mit Ultraschall", J. Krautkrämer und H. Krautkrämer, 5. Auflage, Springer Verlag, ISBN 3-540-15754-9, Kapitel 19.1, Seiten 343 -349. Die hier offenbarten technischen Details zur AVG-Methode werden durch diese Bezugnahme voll umfänglich zum Offenbarungsgehalt der vorliegenden Anmeldung hinzugefügt.

Nachteilig an der AVG-Methode in ihrer gegenwärtig verbreiteten Form ist die Tatsache, dass für eine aussagekräftige Charakterisierung eines Fehlers im Volumen eines Prüflings eine Untersuchung mit einer Mehrzahl von Prüfköpfen durchgeführt werden muss. Dies liegt darin begründet, dass für einen gegebenen Fehler nicht zwangsläufig eine senkrechte Einschallung in den Prüfling eine maximale Echoamplitude liefert. Vielmehr hängt es von der Orientierung des Fehlers im Volumen des Prüflings ab, unter welchem Einschallwinkel ein maximales Echosignal erhalten werden kann. Um tatsächlich einen Wert für die Ersatzreflektorgröße des aufgefundenen Fehlers zu erhalten, der in vernünftiger Weise mit der tatsächlichen Größe des Fehlers korreliert ist, werden daher in der Regel im Rahmen der standardisierten Prüfverfahren basierend auf der AVG-Methode verschiedene Winkelprüfköpfe verwendet, die verschiedene Einschallwinkel realisieren. Dieses Verfahren bedeutet in der Praxis ein hohen Prüfungs- und Dokumentationsaufwand für den Prüfer, so dass in der Regel nur unter wenigen Einschallwinkeln geprüft wird. Darüber hinaus erfordert die Variation des Einschallwinkels einen Wechsel des Prüfkopfs, was zusätzliche Probleme aufgrund der nie hundertprozentig eindeutigen Kalibrierung sowie Ankoppeleigenschaften der Prüfköpfe verursacht. Auch hierdurch wird die Interpretation der an einem Fehler aufgefundenen ERS-Werte erschwert.

Aufgabe der vorliegenden Erfindung ist es daher, ein Verfahren für die zerstörungsfreie Prüfung eines Prüflings mittels Ultraschall anzugeben, welches dem Prüfer eine neuartige Darstellung eines im Volumen des Prüflings aufgefundenen Fehlers zur Verfügung stellt. Weiterhin soll eine Vorrichtung zu Verfügung gestellt werden, die zur Ausführung des erfindungsgemäßen Verfahrens geeignet ist.

Gelöst wird diese Aufgabe durch ein Verfahren mit den Merkmalen des Anspruchs 1 sowie durch eine Vorrichtung mit den Merkmalen des Anspruchs 14.

Das erfindungsgemäße Verfahren gemäß Anspruch 1 ist vorgesehen für die zerstörungsfreie Prüfung eines Prüflings mittels Ultraschall.

Es hat sich im Rahmen aufwendiger Untersuchungen herausgestellt, dass der ERS-Wert eines Fehlers oftmals eine starke Abhängigkeit von demjenigen Winkel aufweist, unter dem der Fehler angeschallt wird. Dieser Winkel ist unmittelbar korreliert mit dem Einschallwinkel β, unter welchem Winkel der gemäß des Verfahrens in den Prüfling eingeschallte Ultraschall in diesen eingekoppelt wird. Dabei hat es sich erwiesen, dass die beobachtete Winkelabhängigkeit des ERS-Werts eines Fehlers Rückschlüsse erlaubt auf wesentliche Eigenschaften eines Fehlers, wie beispielsweise dessen Geometrie wie flächig oder voluminös, insbesondere dessen Symmetrie.

Insbesondere hat sich herausgestellt, dass eine Klassifikation eines im Volumen eines Prüflings aufgefundenen Fehlers anhand der Winkelabhängigkeit seines ERS-Signals vorgenommen werden kann. Entsprechend stellt es für den Prüfer eine wesentliche Erleichterung dar, wenn er über eine grafische Darstellung eines Fehlers verfügt, die er im Volumen des Prüflings aufgefunden hat, aus der er auf die Abhängigkeit des ERS-Werts des Fehlers vom Anschallwinkel bzw. Einschallwinkel β zumindest qualitativ zurück schließen kann.

In einer vorteilhaften Weiterbildung des erfindungsgemäßen Verfahrens wird während der Durchführung des Verfahrens eine Änderung der Position des Einkoppelorts erfasst, an welchen für die Prüfung verwendeten Ultraschallpulse in den Prüfling eingeschallt werden. Eine solche Positionserfassung bietet insbesondere den Vorteil, dass die Positionsinformation zur Erzeugung eines B-Scans (X-Achse: Position auf der Oberfläche des Prüflings, Y-Achse: Tiefe im Prüfling) oder C-Scans des Prüflings verwendet werden können. Darüber hinaus erlaubt die Positionserfassung eine besonders effiziente Vermessung der Winkelabhängigkeit des ERS-Werts eines Fehlers.

In einer weiteren bevorzugten Ausgestaltung des erfindungsgemäßen Verfahrens wird bei der Berechnung des ERS-Werts des Fehlers automatisch der Einfluss der elektronischen Einstellung des Einschallwinkels auf den zu ermittelnden ERS-Wert des Fehlers kompensiert. Entsprechende Algorithmen können ohne weiteres in eine Ansteuereinheit für einen Ultraschallprüfkopf integriert werden. Bevorzugt wird zum Einschallen der gerichteten Ultraschallpulse in den Prüfling ein Sendeprüfkopf verwendet, dessen Ultraschallsender eine Mehrzahl von unabhängig ansteuerbaren Ultraschallwandlern umfasst. Zur elektronischen Einstellung des Einschallwinkels β wird dann die Mehrzahl der Ultraschallwandler individuell phasengenau so angesteuert, dass der Abstrahlwinkel α des Ultraschallsenders variiert wird. Hieraus ergibt sich unmittelbar eine Variation des Einschallwinkels β im Prüfling.

Vorzugsweise wird im Rahmen des erfindungsgemäßen Verfahrens vorgesehen, dass bei der Berechnung des ERS-Werts des Fehlers, welcher im Volumen des Prüflings detektiert wurde, aus den Echosignalen, die dem Fehler zugeordnet werden können, der Einfluss der elektronischen Einstellung des Abstrahlwinkels α und damit des Einschallwinkels β auf den ermittelten ERS-Wert des Fehlers automatisch rechnerisch kompensiert wird. Abstrahlwinkel und Einschallwinkel β sind im Rahmen der vorliegenden Erfindung als äquivalent anzusehen, da sie physikalisch fest miteinander verknüpft sind. Insbesondere bedeutet dies, dass im Rahmen des erfindungsgemäßen Verfahrens automatisiert zumindest eine der folgenden Korrekturen vorgenommen wird, bevorzugt aber mehrere:
● Kompensation der Veränderung der virtuellen Ultrallschallwandlergröße bzw. der damit verbundenen Apertur des Ultraschallwandlers bei sich veränderndem Abstrahlwinkel α bzw. Einschallwinkel β,
● Kompensation der Veränderung der Lage des Einkoppelpunkts des vom Ultrallschallwandler ausgestrahlten Ultraschalls in den Prüfling bei sich veränderndem Abstrahlwinkel α bzw. Einschallwinkel β,
● Kompensation der Veränderung des Schallwegs im Vorlaufkörper bei sich veränderndem Abstrahlwinkel α, und
● Kompensation der Lageänderung des Fokus im Prüfling bei sich veränderndem Abstrahlwinkel α bzw. Einschallwinkel β,

Für die elektronische Einstellung des Einschallwinkels β weisen die bereits erwähnten Phased-Array-Prüfköpfe besondere Vorteile auf. Dies bedeutet aber nicht, dass im Rahmen des erfindungsgemäßen Verfahrens nicht auch andere Ultraschallprüfköpfe mit variablem Einschallwinkel verwendet werden könnten unter der Voraussetzung, dass der Einschallwinkel elektronisch einstellbar und auch quantifizierbar ist.

Im Rahmen des erfindungsgemäßen Verfahrens wird vorteilhaft zur Bestimmung des ERS-Wertes eines Fehlers im Volumen des Prüflings aus den vom Fehler zurückgeworfenen Echosignalen zumindest ein AVG-Diagramm verwendet. Dabei kann dieses AVG-Diagramm spezifisch für die Quelle der Ultraschallpulse sein, also insbesondere spezifisch für den verwendeten Sendeprüfkopf. Weiterhin kann das AVG-Diagramm spezifisch für das Material des Prüflings sein. In einer ersten Ausgestaltung weist das AVG-Diagramm weiterhin eine Abhängigkeit vom Einschallwinkel β des Ultraschalls in den Prüfling oder einer äquivalenten Winkelgröße auf. In einem alternativen Ansatz weist das AVG-Diagramm keine Abhängigkeit vom Einschallwinkel β auf, vielmehr wird der Einfluss des Einschallwinkels β auf die registrierte Echoamplitude bzw. den ERS-Wert des Fehlers im Rahmen des Verfahrens rechnerisch kompensiert.

Im Rahmen der Prüfung des Prüflings wird weiterhin bevorzugt zumindest ein Kalibrationsschritt durchlaufen. Bei diesem wird die Amplitude eines von einem Referenzfehler hervorgerufenen Echos erfasst. Bei dem Referenzfehler handelt es sich bevorzugt um eine Rückwand oder eine Prüfbohrung eines Prüfkörpers, wobei insbesondere im Fall des Rückwandechos auch auf einen separaten Prüfkörper verzichtet und der Kalibrationsschritt unmittelbar am Prüfling selbst ausgeführt werden kann. Bevorzugt wird der Kalibrationsschritt für eine Mehrzahl von Einschallwinkeln und/oder Referenzfehlern durchgeführt, dies ist aber nicht zwingend.

Die zur Durchführung des erfindungsgemäßen Verfahrens geeignete Vorrichtung, auf im Folgenden noch genauer eingegangen wird, bietet dabei bevorzugt die Möglichkeit zur Durchführung standardisierter Kalibrationsschritte an, bei denen z.B. auch unter einer Mehrzahl voreingestellter standardisierter Prüfkörper ausgewählt werden kann.

In einer bevorzugten Ausgestaltung des Verfahrens wird in der erzeugten grafischen Darstellung zumindest eines der folgenden Charakteristika des Fehlers dargestellt:
a) derjenige Einschallwinkel β, unter dem der ERS-Wert des Fehlers maximal ist,
b) eine Information darüber, ob der ERS-Wert des Fehlers über verschiedene Einschallwinkel β im Wesentlichen konstant ist, oder ob er bei verschiedenen Einschallwinkeln variiert.

Insbesondere kann im erzeugten B-Scan ein aufgefundener Fehler durch einen Balken symbolisiert werden, dessen Ausdehnung entlang seiner Längsachse mit dem ERS-Wert des aufgefundenen Fehlers korreliert. Vorteilhaft werden dabei für die Darstellung des ERS-Werts und für die X-Position auf der Prüflingsoberfläche dieselben Skalierungen verwendet. Als Balken soll im Zusammenhang der vorliegenden Erfindung eine beliebige geometrische Figur verstanden werden, die spiegelsymmetrisch bezüglich zweier zueinander orthogonaler Achsen ist, beispielsweise eine Linie, ein Rechteck, eine Ellipse etc.. Dabei wird im Zusammenhang mit der vorliegenden Erfindung eine der beiden Symmetrieachsen des Balkens als dessen Längsachse bezeichnet.

Um die Interpretierbarkeit des im Rahmen des erfindungsgemäßen Verfahrens erzeugten B-Scans zu erhöhen, insbesondere die intuitive Erfassbarkeit des erzeugten B-Scans zu verbessern, hat es sich als vorteilhaft herausgestellt, wenn im erzeugten B-Scan auf geeignete Weise zumindest eines der folgenden weiteren Charakteristika des aufgefundenen Fehlers dargestellt wird:
a) die relative Amplitude des Fehlerechos,
b) der Einschallwinkel β, unter dem der ERS-Wert des aufgefundenen Fehlers maximal ist, z.B. indem der Fehler als Balken dargestellt wird, der senkrecht auf der Einschallrichtung ist, unter der sich das maximale Fehlerecho ergibt,
c) die relative Fehlergröße,
d) Informationen über den Schallweg des Echos, z.B. das Bein, aus welchem das Fehlerecho herrührt, und
e) eine Information darüber, ob der ERS-Wert des aufgefundenen Fehlers über alle überprüften Einschallwinkel β im Rahmen vorgebender Fehlergrenzen gleich oder verschieden ist.

Die Angabe von Relativwerten kann sich z.B. auf im Zusammenhang mit der Prüfung des Prüflings vermessene Referenzwerte beziehen.

Hierzu können im B-Scan vorteilhaft einer oder mehrere der folgenden Anzeigeparameter verwendet werden:
a) die Farbe des Balkens ,
b) die Abmessung des Balkens quer zu seiner Längsachse (Balkenbreite B),
c) der Winkel der Längsachse des Balkens gegen die Oberfläche des Prüflings, und
d) die geometrische Grundform des Balkens.

Beispielhaft werden im Folgenden nun einige Darstellungsmöglichkeiten für verschiedene Fehlercharakteristika näher erläutert.

Im Rahmen der vorliegenden Erfindung soll unter relativer Amplitude des Fehlerechos die Information verstanden werden, ob das vom Fehler im Volumen des Prüflings herrührende Ultraschallecho, d.h. die Amplitude des Echos, eine bestimmte vorgegebene Schwelle überschreitet. Eine solche Schwelle kann sich beispielsweise beziehen auf die gemessene Fehlerechoamplitude im Vergleich zur Amplitude eines Referenzfehlers. Insbesondere kann eine Schwelle dann angegeben werden in "Millimeter ERS", z.B. die ERS soll größer oder gleich sein einer Registriergrenze von beispielhaft 2 Millimetern oder 5 Millimetern.

Wird im Rahmen des erfindungsgemäßen Verfahrens der Einschallwinkel β variiert und derjenige Einschallwinkel β bestimmt, unter dem der ERS-Wert des Fehlers maximal ist, so kann dem Prüfer ein Anhaltspunkt für die Orientierung des Fehlers im Volumen des Prüflings gegeben werden, indem die Längsachse des Balkens, welcher den Fehler im B-Scan repräsentiert, gegenüber der Oberfläche des Prüflings geneigt dargestellt wird. Vorteilhaft wird hier der Balken so dargestellt, dass seine Längsachse senkrecht auf der akustischen Achse des unter denjenigen Winkel α eingeschallten Ultraschalls steht, für den der ERS-Wert des Fehlers maximal ist.

Eine weitere für den Prüfer und die Dokumentation relevante Information ist es, ob der ERS-Wert des aufgefundenen Fehlers oberhalb oder unterhalb einer vorgegebenen Registriergrenze liegt. So ist es beispielsweise möglich, im erzeugten B-Scan Fehlersignale unterhalb einer bestimmten Schwelle vollständig zu unterdrücken. Alternativ können solche Fehlersignale auch farbig codiert oder als transparente Balken dargestellt werden, um den Abstand von der Registriergrenze (z.B. in "mm ERS" oder dB) anzugeben. Insbesondere die letzten beiden Darstellungsvarianten bieten den Vorteil, dass der Prüfer darauf hingewiesen werden kann, dass an der untersuchten Stelle zwar ein Fehler im Volumen des Prüflings vorhanden ist, dieser aber bezüglich seines ERS-Werts so klein ist, dass er aufgrund der einschlägigen Prüfvorschriften nicht dokumentiert zu werden braucht.

Weiterhin kann für den Prüfer die Information interessant sein, aus welchem Schallweg, also z.B. "Bein" des eingeschalteten Ultraschallstrahls das Fehlerecho resultiert. Diese Information ist insbesondere bei der Durchführung einer Prüfung an einem Prüfling mit planparallelen Flächen interessant, da hier häufig die Situation auftritt, dass der Fehler erst vom Ultraschallstrahl erfasst wird, nachdem dieser zumindest einmalig an der Rückwand des Prüflings reflektiert wurde. Diese Information lässt sich aus der Laufzeit des Fehlerechos bestimmen und im B-Scan beispielsweise durch farbige Codierung des Balkens grafisch für den Prüfer darstellen.

Weiterhin ist für den Prüfer die Information von Bedeutung, ob der aufgefundene Fehler im Volumen des Prüflings eher als flächenhaft ausgedehnt oder als dreidimensional ausgedehnter Fehler anzusehen ist. Die dreidimensional ausgedehnten Fehler werden in der Regel Lunker oder Fehlstellen sein, die fertigungsbedingt sind und häufig keine Gefahr für Ermüdungsbrüche darstellen. Hingegen sind flächenhaft ausgedehnte Fehler in der Regel mit Rissen im Prüfling korreliert, die Ermüdungserscheinungen sein können und eine starke Tendenz haben sich auszubreiten, was zu Ermüdungsbrüchen führen kann. Ein dreidimensional ausgedehnter Fehler im Volumen des Prüflings ist im Rahmen des erfindungsgemäßen Verfahrens dadurch charakterisiert, dass der resultierende ERS-Wert des Fehlers im Wesentlichen unabhängig vom Einschallwinkel ist. Hingegen zeigen zweidimensional ausgedehnte Fehler eine starke Abhängigkeit vom Einschallwinkel. Hier kann also in den dargestellten Balken die Information codiert werden, ob es sich eher um einen flächenhaft ausgedehnten oder um einen dreidimensionalen Fehler handelt. Dies kann beispielsweise durch Anpassung von Länge und Breite des dargestellten Balkens geschehen oder auch durch die Auswahl einer geometrischen Form, die die Symmetrie des Fehlers repräsentiert. Aber auch eine farbige Codierung kann an dieser Stelle vorteilhaft verwendet werden.

Alternativ zu der vorstehend umfänglich beschriebenen Erzeugung eines B-Scans kann erfindungsgemäß auch die Erzeugung eines C-Scans (X-Achse: Position in x-Richtung auf der Oberfläche des Prüflings, Y-Achse: Position in Y-Richtung auf der Oberfläche des Prüflings) oder die Erzeugung eines Sector-Scans (auch S-Scan, X-Achse: Entfernung vom Einschallort / Tiefe im Prüfling, Y-Achse: Azimuthalwinkel: Einschallwinkel) vorgesehen werden und in speziellen Anwendungsfällen vorteilhaft sein. Alle vorstehenden Ausführungen zur Darstellung der ermittelten Fehlercharakteristika im B-Scan lassen sich unmittelbar auf die weiterhin vorgesehenen C-und S-Scans übertragen.

Das erfindungsgemäße Verfahren erlaubt es, das in vielen Prüfvorschriften vorgeschriebene AVG-Verfahren nunmehr mit modernen Ultraschallprüfköpfen auszuführen, die eine elektronische Einstellung des Einschallwinkels in den Prüfling erlauben, beispielsweise unter Verwendung der Phased-Array-Technik.

Eine erfindungsgemäße Vorrichtung gemäß Anspruch 14 ist vorgesehen für die zerstörungsfreie Prüfung eines Prüflings mittels Ultraschall.

Erfindungsgemäß weist nun der Ultraschallsender der Vorrichtung eine Mehrzahl von unabhängig ansteuerbaren Ultraschallwandlern auf. Weiterhin ist die Ansteuer- und Auswerteeinheit dazu eingerichtet, die diese Ultraschallwandler individuell phasengenau so anzusteuern, dass der Abstrahlwinkel α des Ultraschallsenders und damit der Einschallwinkel β in den Prüfling elektronisch verstellt werden kann. Weiterhin ist die Ansteuer- und Auswerteeinheit dazu eingerichtet, aus Echosignalen, die dem Fehler zugeordnet werden können, den ERS-Wert eines Fehlers im Volumen des Prüflings für eine Mehrzahl von Einschallwinkeln zu bestimmen. Schließlich ist die Ansteuer- und Auswerteeinheit dazu eingerichtet, eine grafische Darstellung des vorstehend erwähnten Fehlers zu erzeugen, aus der die Abhängigkeit des ermittelten ERS-Werts des Fehlers vom Einschallwinkel β zumindest qualitativ ablesbar ist.

Insbesondere kann die erzeugte grafische Darstellung den ERS-Wert des Fehlers in direkter Abhängigkeit vom Einschallwinkel β wiedergeben. Aus der Winkelabhängigkeit des ERS-Werts des Fehlers kann der Prüfer - wie vorstehend bereits ausführlich diskutiert wurde - Rückschlüsse auf wesentliche Eigenschaften des Fehlers ziehen. Erfindungsgemäß ist die erzeugte grafische Darstellung des Fehlers ein B-Scan, ein C-Scan oder ein Sektor-Scan des Prüflings, in dem der winkelabhängige ERS-Wert des Fehlers auf geeignete Weise verzeichnet ist.

In einer besonders bevorzugten Ausgestaltung der erfindungsgemäßen Vorrichtung, die insbesondere in Verbindung mit der Erzeugung eines B-Scans, C-Scans oder Sektor-Scans des Prüflings vorteilhaft ist, umfasst die Vorrichtung weiterhin eine Wegerfassungseinheit, die dazu eingerichtet ist, eine Änderung der Position des Prüfkopfs auf der Oberfläche des Prüflings zu erfassen. Eine solche Wegerfassungseinheit kann beispielsweise mittels eines mechanischen Wegaufnehmers realisiert werden, der am Prüfkopf selbst angeordnet ist. Aber auch optisch arbeitende Wegaufnehmer nach dem Prinzip der optischen Maus können verwendet werden. Schließlich können bei der Verwendung eines Phased-Array-Ultraschallsenders auch die Veränderungen der Ultraschallsignale, die bei einer Positionsänderung des Prüfkopfs auf der Oberfläche des Prüflings auftreten, für eine Positionsbestimmung herangezogen werden. Auf die entsprechenden Literaturstellen wurde bereits hingewiesen. Die Verwendung eines linearen Arrays erlaubt neben der Erfassung einer Lageänderung des Prüfkopfs auf der Oberfläche des Prüflings in der Richtung der Längsachse des Arrays darüber hinaus die Durchführung eines elektronischen Scans in dieser Richtung, indem nacheinander verschiedene Untergruppen von Wandlern angesprochen werden. Die Verwendung eines zweidimensionalen Phased-Arrays erlaubt insbesondere die Erfassung einer Positionsänderung in zwei Raumrichtungen, und darüber hinaus die Erfassung einer Drehung des Prüfkopfs auf der Oberfläche des Prüflings.

Bezüglich der Möglichkeiten, in den erzeugten grafischen Darstellungen des Fehlers wesentliche Fehlereigenschaften wiederzugeben, wurde im Zusammenhang mit dem erfindungsgemäßen Verfahren bereits ausführlich eingegangen. Die erfindungsgemäße Vorrichtung ist bevorzugt dazu eingerichtet, die im Zusammenhang mit dem Verfahren erläuterten Darstellungen des Fehlers zu erzeugen.

Schließlich ergeben sich besondere Vorteile, wenn die Ansteuer- und Auswerteeinheit dazu eingerichtet ist, bei der Berechnung des ERS-Werts des Fehlers den Einfluss der elektronischen Einstellung des Einschallwinkels β auf den zu ermittelnden ERS-Wert des Fehlers automatisch zu kompensieren.

Wie im Zusammenhang mit dem erfindungsgemäßen Verfahren bereits erläutert wurde, kann der ERS-Wert eines Fehlers beispielsweise automatisiert durch Vergleich mit einer Mehrzahl von gespeicherten Referenzwerten bestimmt werden, wobei es sich bei diesen Referenzwerten beispielsweise um ein oder mehrere AVG-Diagramme handeln kann. In diesem Zusammenhang wird darauf hingewiesen, dass für die Bestimmung eines ERS-Werts eines aufgefundenen Fehlers mittels des erfindungsgemäßen Verfahrens für jeden Winkel, unter dem der Fehler angeschallt wird, neben einem AVG-Diagramm auch ein Referenzecho z.B. aus einem Prüfkörper zur Verfügung stehen muss.

In einer besonders bevorzugten Ausgestaltung ist in der Ansteuer- und Auswerteeinheit eine Vielzahl von Referenzwerten gespeichert, beispielsweise in Form von AVG-Diagrammen, die gruppenweise mit verschiedenen Einschallwinkeln β korreliert sind. Dabei können diese Referenzwerte weiterhin prüfkopfspezifisch sein. Insbesondere kann es sich also um eine prüfkopfspezifische Menge von AVG-Diagrammen zu verschiedenen Einschallwinkeln β handeln. Bevorzugt ist der Prüfkopf weiterhin mit einer elektronischen Kennung versehen, die es der Ansteuereinheit erlaubt, bei Anschluss des Prüfkopfs selbständig den Prüfkopftyp oder sogar den individuellen Prüfkopf zu erkennen und die gespeicherten Prüfkopf (typ) spezifischen Referenzwerte auszuwählen.

In allen Ausgestaltungen setzt aber die Bestimmung eines (Einschallwinkelspezifischen) ERS-Werts für einen aufgefundenen Fehler i.d.R. voraus, dass ein Referenzwert vorliegt, der z.B. an einem Prüfkörper unter dem jeweiligen Winkel erfasst wurde, oder aber aus einer Interpolation zwischen verschiedenen vermessenen Winkeln herrührt.

Besondere Vorteile ergeben sich, wenn die Ansteuer- und Auswerteeinheit dazu eingerichtet ist, bei der Berechnung des ERS-Wert des Fehlers den Einfluss der elektronischen Einstellung des Einschallwinkels β auf den zu ermittelnden ERS-Wert des Fehlers automatisch zu kompensieren.

So ist in einer besonders bevorzugten Ausgestaltung der erfindungsgemäßen Vorrichtung deren Ansteuer- und Auswerteeinheit dazu eingerichtet, automatisiert vom Abstrahlwinkel α des Ultraschallsenders auf den im Prüfling resultierenden Einschallwinkel β umzurechnen, um den Einfluss der elektronischen Einstellung des Einschallwinkels β auf den zu ermittelnden ERS-Wert des Fehlers automatisiert zu kompensieren. Insbesondere kann diese Kompensation prüfkopfspezifisch ausgestaltet sein. Darüber hinaus wird sie praktisch dazu eingerichtet sein, die ultraschallspezifischen Eigenschaften des Materials der Vorlaufstrecke und des Prüflings wie beispielsweise die Schallgeschwindigkeit zu berücksichtigen.

Eine weitere Verbesserung kann erzielt werden, wenn zur automatischen Kompensation des Einflusses der elektronischen Einstellung des Einschallwinkels β auf den zu ermittelnden ERS-Wert des Fehlers die Ansteuer- und Auswerteeinheit der erfindungsgemäßen Vorrichtung dazu eingerichtet ist, automatisiert die mit der elektronischen Variation des Einschallwinkels β einhergehende Variation der virtuellen Ultraschallsendergröße und damit der Apertur des Prüfkopfs zu kompensieren. Die virtuelle Ultraschallsendergröße ergibt sich aus einer Projektion der tatsächlichen geometrischen Abmessung des Ultraschallsenders auf eine senkrecht zur elektronisch eingestellten Abstrahlrichtung des Ultraschallsenders. Strahlt der Ultraschallsender unter einem von 0° verschiedenen Abstrahlwinkel α ab, so hat dies unmittelbar eine Abnahme der virtuellen Ultraschallsendergröße zur Folge. Da die Ultraschallsendergröße ggf. in die Berechnung des ERS-Wertes eines detektierten Fehlers einbezogen wird, muss hier ggf. eine entsprechende automatische Kompensation erfolgen.

Eine weitere Verbesserung ergibt sich, wenn die Ansteuer- und Auswerteeinheit dazu eingerichtet ist, den Einfluss der Verschiebung des Einkoppelorts X₀, die mit einer Verstellung des Abstrahlwinkels α bzw. Des Einschallwinkels β einhergeht, auf den zu ermittelnden ERS-Wert des Fehlers automatisch zu kompensieren.

Schließlich kann noch eine automatische Kompensation der Lageänderung des Fokus im Prüfling, die sich bei einer Variation des Abstrahlwinkels α wegen der daraus resultierenden Veränderung der Schallweglänge im Vorlaufkörper ergibt, vorgesehen werden.

Abschließend sei darauf hingewiesen, dass die erfindungsgemäß automatische Kompensation des Einflusses der elektronischen Verstellung des Einschallwinkels β auf den zu ermittelnden ERS des Fehlers auf Basis von gespeicherten AVG-Diagrammen auf zwei verschiedene Arten vorgenommen werden kann. Einerseits kann die Ansteuer- und Auswerteeinheit dazu eingerichtet sein, die tatsächlichen Messwerte (d.h. zeitaufgelöste Echosignale) unter Berücksichtigung des Einflusses der Verstellung des Einschallwinkels β zu normieren, d.h. z.B. auf die Ergebnisse eines konventionellen Prüfkopfs mit feststehendem Einschallwinkel β umzurechnen. Diese werden dann mit einem standardisierten AVG-Diagramm abgeglichen.

Andererseits können bereits bei der Erstellung der in der Ansteuer- und Auswerteeinheit hinterlegten AVG-Diagramme die prüfkopfspezifischen Einflüsse der elektronischen Winkelverstellung auf die Echosignale berücksichtigt werden, d.h. bereits in den gespeicherten AVG-Diagrammen wird die vorzunehmende Kompensation berücksichtigt. Auch diese Implementierung soll vom erfindungsgemäßen Verfahren sowie der erfindungsgemäßen Vorrichtung umfasst sein.

Weitere Vorteile und Merkmale der erfindungsgemäßen Vorrichtung sowie des erfindungsgemäßen Verfahrens ergeben sich aus den Unteransprüchen sowie aus den Ausführungsbeispielen, die nachfolgend anhand der Zeichnung näher erläutert werden.

In dieser zeigen:
- Fig. 1:: eine schematische Darstellung einer erfindungsgemäßen Vorrichtung für die zerstörungsfreie Prüfung eines Prüflings,
- Fig. 2a-2c:: einen A-Scan des Prüflings, aufgenommen an verschiedenen Einschallpositionen x sowie unter verschiedenen Einschallwinkeln β, sowie den Verlauf der Maximalamplitude Amax für ein gegebenen Einschallwinkel β in Abhängigkeit von der Tiefe d im Prüfling,
- Fig. 3:: eine Darstellung der maximalen Echoamplitude Amax in Abhängigkeit vom Einschallwinkel β,
- Fig. 4:: ein winkelaufgelöstes Prüfkopfspezifisches AVG-Diagramm,
- Fig. 5:: eine schematische Darstellung der Strahlgeometrie am Prüfkopf,
- Fig. 6:: eine einen B-Scan der Probe repräsentierende Darstellung, in der ein Fehler durch einen zugehörigen ERS-Wert repräsentiert wird, und
- Fig. 7:: eine Darstellung entsprechend Figur 6 des Prüflings mit einer Mehrzahl von Fehlern, die verschiedene Reflektionseigenschaften aufweisen.
- Fig. 8:: eine schematische Darstellung eines Verfahrens zur Erfassung der Winkelabhängigkeit des ERS-Werts eines Fehlers im Volumen des Prüflings, und
- Fig. 9a, 9b:: schematische Darstellungen des winkelabhängigen ERS-Werts zweier verschiedener Fehler im Volumen des Prüflings.

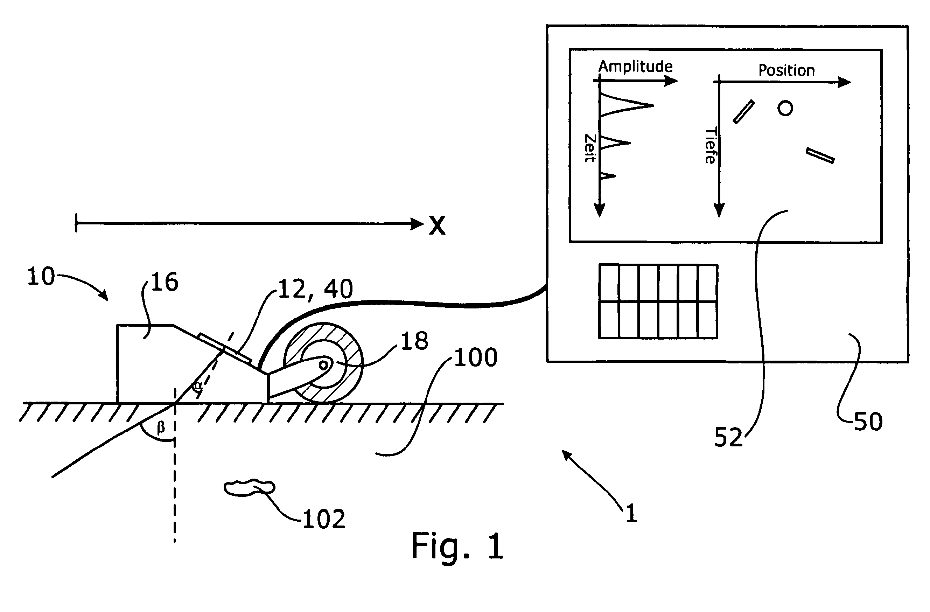

Figur 1 zeigt ein Ausführungsbeispiel einer erfindungsgemäßen Vorrichtung 1 für die zerstörungsfreie Prüfung eines Prüflings 100 mittels Ultraschall. Die Vorrichtung 1 umfasst einen Sendeprüfkopf 10, der seinerseits eine Vorlaufstrecke 16 und einen daran angeordneten Ultraschallsender 12 umfasst. Der Ultraschallsender 12 ist dabei so an der Vorlaufstrecke 16 angeordnet, dass bei einer Anregung des Ultraschallsenders 12 zur Aussendung von Ultraschallpulsen diese im Wesentlichen in die Vorlaufstrecke 16 eingekoppelt werden. Die Vorlaufstrecke 16 kann dabei beispielsweise von einem Körper aus Plexiglas® gebildet werden, wie dies aus dem Stand der Technik grundsätzlich bekannt ist. Bevorzugt sind die Elemente des Sendeprüfkopfs 10 in einem gemeinsamen Gehäuse zusammengefasst, welches in der Figur aus Gründen der Übersichtlichkeit nicht gezeigt ist. Bei dem dargestellten Sendeprüfkopf 10 handelt es sich um einen Winkelprüfkopf, der dazu vorgesehen ist, die vom Ultraschallsender 12 ausgesandten Ultraschallpulse unter einem Einfallswinkel β, der gegen die Flächennormale der Eintrittsfläche des Prüflings 100 gemessen wird, in den Prüfling 100 einzukoppeln. Die Verwendung von Winkelprüfköpfen ist optional und nicht zwingend, je nach Anwendungsfall können auch Prüfköpfe für eine senkrechte Einschallung (d.h. β = 0°) verwendet werden.

Bei dem im Sendeprüfkopf 10 verwendeten Ultraschallsender 12 handelt es sich um einen Ultraschallsender vom Phased-Array-Typ, d.h., der Ultraschallsender 12 umfasst eine Mehrzahl von Ultraschallwandlern 14, die zumindest eine lineare Anordnung ausbilden und individuell ansteuerbar sind. Die Längsachse des zumindest linearen Arrays der Ultraschallwandler 14 ist dabei in der mit X- gekennzeichneten Richtung orientiert. Durch gezielte Einstellung der Phasenlage zwischen den einzelnen Ultraschallwandlern 14 ist es möglich, den Abstrahlwinkel α, d.h. die Strahlrichtung, in weiten Grenzen dynamisch zu beeinflussen.

Der Sendeprüfkopf 10 umfasst im gezeigten Ausführungsbeispiel einen mechanischen Wegaufnehmer 18, der die Bewegung des Sendeprüfkopfs 10 auf der Oberfläche des Prüflings 100 mechanisch abtastet und eine entsprechende Positionsinformation zur Verfügung stellt, z.B. an eine mit dem Sendeprüfkopf 10 verbundene Ansteuereinheit 50. Alternativ kann der Wegaufnehmer 18 auch berührungslos arbeiten, z.B. nach dem Prinzip der optischen Maus. Der Wegaufnehmer 18 ist - unabhängig von seiner Bauart - bevorzugt in der Lage, die Bewegung des Sendeprüfkopfs 10 in zwei voneinander unabhängigen Richtungen auf der Oberfläche des Prüflings 100 zu detektieren. Besondere Vorteile ergeben sich, wenn auch Drehbewegungen des Sendeprüfkopfs 10 auf der Oberfläche des Prüflings detektiert werden können. Auf Basis der Technologie, die in der Patentschrift US 7,324,910 B2 offenbart ist, sowie deren Weiterentwicklung, die in der deutschen Patentanmeldung Az. 10 2007 028 876.1 vom 26. Juni 2007 offenbart ist, kann vollständig auf einen separat ausgebildeten Wegaufnehmer verzichtet werden, da die gesamte Positionsinformation aus den Signalen des Ultraschallsenders 12 selbst gewonnen werden kann.

Mit dem Sendeprüfkopf 10 verbunden ist eine Ansteuereinheit 50, die dazu eingerichtet ist, die im Ultraschallsender 12 des Sendeprüfkopf 10 angeordneten Ultraschallwandler 14 individuell phasengenau anzusteuern. Weiterhin ist die Ansteuereinheit 50 dazu eingerichtet, mit einem Ultraschallempfänger 40 verbunden zu werden, um aus einem Prüfling 10 zurückreflektierte Echosignale zu empfangen, die aus den vom Ultraschallsender 12 eingeschallten Ultraschallpulsen resultieren. Im vorliegend gezeigten Ausführungsbeispiel dient der im Sendeprüfkopf 10 angeordnete Ultraschallsender 12 auch als Ultraschallempfänger 40. Hierzu werden die im Ultraschallsender 12 enthaltenen, separat ausgebildeten und individuell ansteuerbaren Ultraschallwandler 14 nach der Aussendung eines Sendepulses elektrisch zu einem großflächigen Ultraschallsender 12 zusammengeschaltet werden, der dann als Ultraschallempfänger 40 fungiert. Selbstverständlich ist es aber auch möglich, einen separat ausgebildeten Ultraschallempfänger 40 zu verwenden, der z. B. in einem separat ausgebildeten Empfangsprüfkopf angeordnet sein kann. Ein solcher separater Empfangsprüfkopf würde im vorliegenden Ausführungsbeispiel weiterhin ebenfalls eine Vorlaufstrecke umfassen, entsprechend der Vorlaufstrecke 16 des Sendeprüfkopfs 10.

Zur zerstörungsfreien Prüfung eines Prüflings 100 auf beispielsweise im Volumen des Prüflings 100 verborgene Fehler 102 wird der Sendeprüfkopf 10 mit der Steuereinheit 50 verbunden und auf die Oberfläche des Prüflings 100 aufgesetzt. Die akustische Ankopplung des Sendeprüfkopfs 10 an den Prüfling 100 erfolgt in der Regel unter Verwendung eines geeigneten Koppelmittels, bei welches sich beispielsweise um Wasser, Öl oder auch um ein wasserbasiertes Gel handeln kann.

Bei dem Prüfling 100 handelt es sich bevorzugt um ein mechanisches Werkstück oder Werkzeug, es kann sich aber auch um eine biologische Probe handeln.

Nunmehr bewegt der Prüfer den Sendeprüfkopf 10 entlang der in Figur 1 mit X gekennzeichneten Richtung auf der Oberfläche des Prüflings 100 hin und her. Zugleich beobachtet er die Anzeige auf einer der Ansteuereinheit 50 zugeordneten Anzeigeeinrichtung 52, die im gezeigten Ausführungsbeispiel als Display in die Ansteuereinheit 50 integriert ist. Auf der Anzeigeeinrichtung 52 wird im gezeigten Ausführungsbeispiel ein A-Bild dargestellt, in welchem die Amplitude der zurückreflektierten Ultraschallpulse für den gegebenen Einschallort X als Funktion der Zeit dargestellt ist. Trifft der vom Sendeprüfkopf 10 ausgesandte Schallstrahl auf einen Fehler 102 im Volumen des Prüflings 100, d.h. auf eine ultraschallreflektierende Struktur wie eine Fehlstelle, einen Lunker oder einen Riss, so wird ein Teil des eingeschallten Stahlstrahls zurückreflektiert und gelangt auf demselben Wege zum Ultraschallsender 12 des Sendeprüfkopfs zurück. Wie erwähnt fungiert dieser zugleich als Ultraschallempfänger 40, der das zurückreflektierte Schallsignal in ein elektrisches Signal umwandelt, welches dann ggf. auf geeignete Weise verstärkt und an die Ansteuereinheit 50 ausgegeben wird. In der Ansteuereinheit 50 wird das empfangene Echosignal, welches in der Regel als elektrisches Signal vorliegt, vom Sendeprüfkopf 10 ggf. aber z.B. auch in Form eines optischen Signals übermittelt werden kann, auf geeignete Weise aufbereitet, dies kann beispielsweise durch hoch zeitaufgelöste AD-Wandlung und Signalaufbereitung geschehen. Nachfolgend wird das Signal in Form des vorstehend beschriebenen A-Scans auf der Anzeigeeinrichtung 52 dargestellt. Trifft der eingeschallte Ultraschallstrahl auf einen Fehler 102, so ergeben sich hieraus Echosignale, die im A-Scan unmittelbar sichtbar sind. Die vorbeschriebene Verfahrensweise erfolgt dabei vorteilhaft bei festgehaltenem Einschallwinkel β.

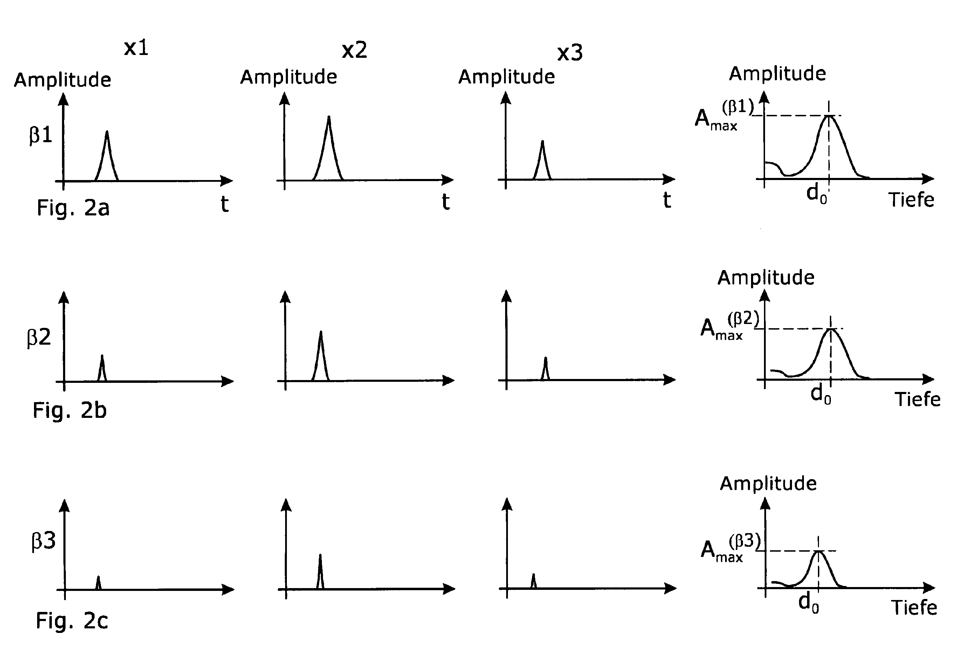

Hat der Prüfer auf die vorbeschriebene Verfahrensweise einen Fehler 102 aufgespürt, so versucht er, durch Variation der X-Position des Sendeprüfkopfs 10 auf der Oberfläche des Prüflings 100, die Amplitude des resultierenden Fehlersignals zu maximieren, d.h. das Signal zu züchten. Auch dieses Züchten des Signals erfolgt für einen festgehaltenen Einschallwinkel β 1. Die sich beim Züchten des Echosignals ergebenden A-Scans an verschiedenen Einschallorten X1, X2 und X3 sind in Figur 2a dargestellt. Deutlich wird, dass aufgrund der Veränderung des Laufwegs im Prüfling 100 das Echosignal zu verschiedenen Zeiten auftritt, darüber hinaus aber auch in seiner maximalen Amplitude variiert. Dies liegt daran, dass beim Verschieben des Sendeprüfkopfs 10 auf der Oberfläche des Prüflings 100 das Zentrum des Schallkegels, in dem der höchste Schalldruck herrscht, über den Fehler 102 geschoben wird. In der Regel ergibt sich die maximale Amplitude im Echosignal, wenn der Schallstrahl den Fehler 102 zentral trifft. Ermittelt man die Einhüllende aller Echosignale für einen festgehaltenen Einschallwinkel β 1 bei einer Variation des Einschallorts X, so erhält man eine Darstellung der Echoamplitude als Funktion der Laufzeit bzw. der Tiefe des Fehlers 102 im Prüfling 100, wie dies im rechten Diagramm der Figur 2a anschaulich dargestellt ist. Aus diesem Diagramm lässt sich die maximale Echoamplitude Amax (β1) bestimmen, die sich für den gewählten Einschallwinkel β 1 ergibt.

Danach kann der Prüfer den Einschallwinkel β variieren, so dass er dieselbe Untersuchung für einen veränderten Einschallwinkel β 2 nochmals durchführt. Alternativ ist auch eine automatische Winkeländerung im Rahmen eines teilautomatisierten Prüfungsverfahrens möglich. Auch hieraus ergibt sich ein Diagramm für den Verlauf der Amplitude als Funktion der Zeit bzw. der Tiefe des Fehlers 102 im Prüfling 100. Ein solches Diagramm ist in Figur 2b rechts dargestellt. Die sich hier ergebende maximale Echoamplitude beim Einschallwinkel β 2 muss nicht zwingend der Echoamplitude beim erstgewählten Einschallwinkel β 1 entsprechen, in der Regel wird hier sogar eine Abweichung vorliegen, sofern es sich nicht um einen regelmäßig geformten Fehler handelt.

Kompensiert man die unterschiedlichen Laufzeiten, die sich durch die unterschiedlichen Einschallwinkel β 1 und β 2 ergeben, so liegen die Peaks in der erwähnten Darstellung der Einhüllenden Amax (β) im Wesentlichen an derselben Stelle D₀. Verzichtet man jedoch auf eine solche Laufzeitkompensation, so kommen die Peaks an verschiedenen Stellen zu liegen.

Exemplarisch ist in Figur 2c das Ergebnis desselben Verfahrens für einen nochmals veränderten Einschallwinkel β 3 dargestellt.

Der Einschallwinkel β wird bei der vorstehend beschriebenen Vorgehensweise unter Ausnutzung der vorteilhaften Sendeeigenschaften eines Ultraschallsenders 12 vom Phased-Array-Typ elektronisch durchgestimmt.

In einer alternativen Ausgestaltung ist die Ansteuereinheit 50 dazu eingerichtet, für einen gegebenen Einschallort X ein sich ggf. ergebendes Echosignal automatisch zu optimieren durch Variation des Einschallwinkels β.

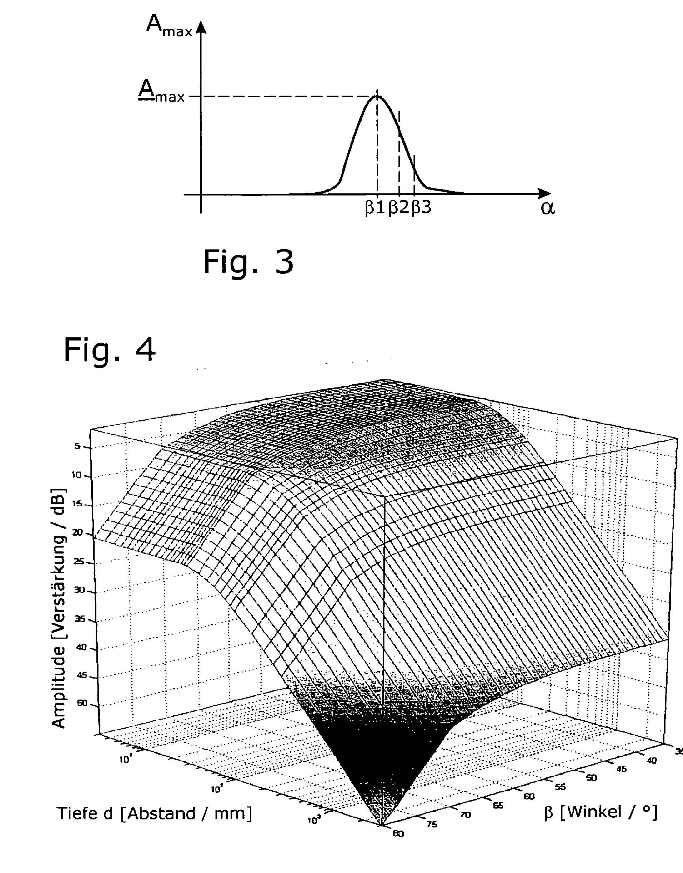

Trägt man um die sich für verschiedene Einschallwinkel β ergebenden Maximalamplituden Amax über den korrespondierenden Einschallwinkel β auf, so erhält man ein Diagramm wie aus Fig. 3 ersichtlich ist. Aus diesem Diagramm bzw. den zugrunde liegenden Echodaten kann nun derjenige Einschallwinkel β bestimmt werden, für den der untersuchte Fehler 102 die maximale Echoamplitude Amax zeigt. Auch kann hieraus auf einfache Weise die Winkelabhängigkeit der Ultraschallreflektivität des Fehlers 102 veranschaulicht und analysiert werden. Auf mögliche Interpretationen des erzielten Verhaltens bezüglich der Art des Fehlers 102 wurde vorstehend bereits eingegangen.

Im Vorfeld der vorstehend erläuterten praktischen Prüfung des Prüflings werden - wie aus dem Stand der Technik für Prüfköpfe mit feststehendem Einschallwinkel β bekannt - sogenannte AVG-Diagramme ermittelt. Dabei zeigt ein AVG-Diagramm die Echoamplitude von Kreisscheibenreflektoren verschiedener Durchmesser und auch eines ausgedehnten ebenen Reflektors (Rückwandecho) als Funktion des Abstands, d.h. als Funktion der Tiefe d im Prüfling. Im Gegensatz zu den aus dem Stand der Technik vorbekannten AVG-Diagrammen und Vorrichtungen für die Ultraschallmessung, in denen prüfkopfspezifische AVG-Diagramme beispielsweise in digitaler Form hinterlegt sind, werden im Rahmen der vorliegenden Erfindung die AVG-Diagramme zusätzlich winkelaufgelöst aufgenommen bzw. generiert und ggf. in der Ansteuereinheit 50 hinterlegt. Beispielhaft zeigt Figur 4 ein solches AVG-Diagramm für einen vorgegebenen Durchmesser eines Kreisscheibenreflektors als Funktion des Abstands d und als Funktion des Winkels β.

Zur Bestimmung des ERS-Werts eines Fehlers mit Hilfe eines Phased-Array-Prüfkopfs, welcher eine elektronische Variation des Einschallwinkels β in den Prüfling 100 erlaubt, kann eine Anpassung des aus dem Stand der Technik bekannten allgemeinen AVG-Diagramms (vgl. US 5,511,425 A), welches auf theoretischen Überlegungen basiert, in verschiedener Hinsicht erforderlich sein. Einerseits ist eine Kalibration des i. A. Prüfkopf-spezifischen AVG-Diagramms erforderlich, um die Ultraschalleigenschaften des Materials des Prüflings zu berücksichtigen und Prüfkopf-spezifische Effekte wie eine Alterung der Ultraschallwandler oder eine veränderte Ankopplung des Sendeprüfkopfs an den Prüfling zu kompensieren. Hierzu wird vor der Durchführung einer eigentlichen Prüfung eines Prüflings 100 in den meisten Prüfvorschriften die Durchführung eines Kalibrationsschrittes verlangt, um das allgemeine AVG-Diagramm, welches bereits in der Vorrichtung 1 hinterlegt sein kann, zu kalibrieren.

Darüber hinaus ist bei einer elektronischen Variation des Einschallwinkels β mit Hilfe eines Phased-Array-Prüfkopfs zu berücksichtigen, dass sich die Ultraschalleigenschaften des Prüfkopfs durch die Winkeländerung selbst unmittelbar verändern. Aus diesem Grunde muss das allgemeine AVG-Diagramm, welches für einen bestimmten Einschallwinkel bestimmt wurde, auf andere (elektronische eingestellte) Einschallwinkel β umgerechnet werden. Insbesondere ist es möglich, diese Umrechnung in der Vorrichtung selbst vorzunehmen, so dass eine Hinterlegung einer Vielzahl von Prüfkopf-spezifischen AVG-Diagrammen für verschiedene Einschallwinkel β nicht erforderlich ist. In einem alternativen Ansatz ist es selbstverständlich auch möglich, in der Vorrichtung 1 eine Vielzahl von z. B. Prüfkopfspezifischen zu hinterlegen, die sich auf eine Mehrzahl von Einschallwinkeln β beziehen. Auch hier können die AVG-Diagramme empirisch ermittelt oder theoretisch berechnet sein.

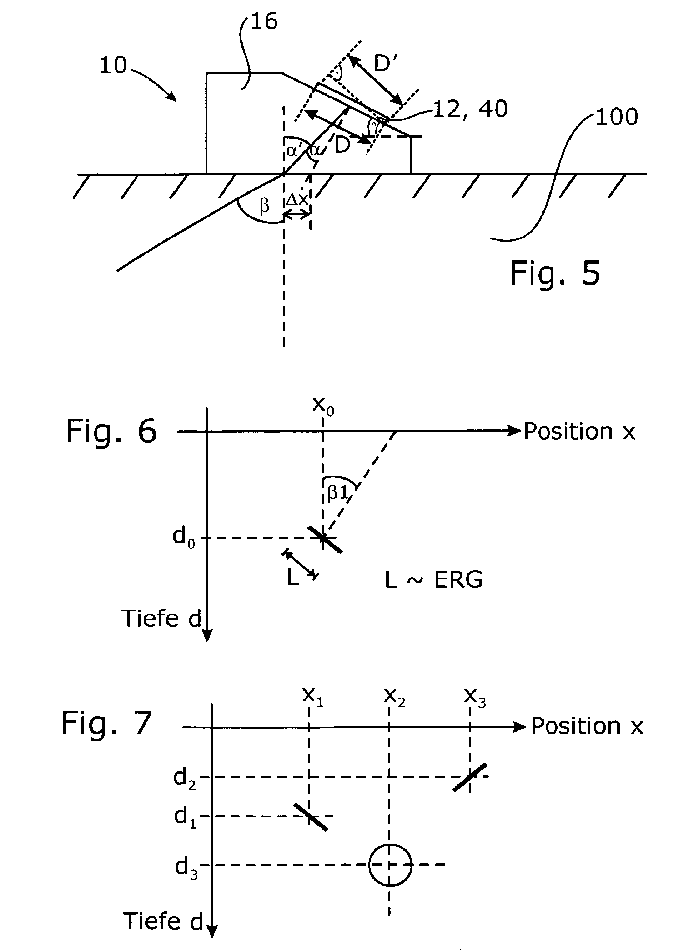

Wie vorstehend bereits erläutert wurde, kann bei Verwendung einer erfindungsgemäßen Vorrichtung der Einschallwinkel β elektronisch durchgestimmt werden. Wie aus Figur 5 ersichtlich ist, ändert sich beispielsweise bei einem Winkelprüfkopf mit einer Vorlaufstrecke bei einem elektronischen Durchstimmen des Einschallwinkels β sowohl der Einkoppelpunkt des Schallstrahls in den Prüfling um ΔX als auch der Durchmesser des Schallstrahls bei seinem Übertritt von der Vorlaufstrecke in den Prüfling. Dies kann auch als eine virtuelle Veränderung der Abmessungen des Ultraschallsenders 12 interpretiert werden (D → D'), die ebenfalls bei der Aufnahme der vorstehend erwähnten AVG-Diagramme berücksichtigt werden muss. Mittels einfacher geometrischer Überlegungen sowie dem akustischen Brechungsgesetz ist es auf einfache Weise möglich, den Einfluss der elektronischen Veränderung des Einschallwinkels β auf die Veränderung des Einkoppelpunkts und die Größe des virtuellen Ultraschallsenders (12) zu berechnen.

Um nun eine Ersatzreflektorgröße ERS für den im Volumen des Prüflings aufgefundenen Fehler zu bestimmen, lässt sich der Prüfer - wie bei den aus dem Stand der Technik vorbekannten Vorrichtungen mit Prüfköpfen mit feststehendem Einschallwinkel β - diejenige AVG-Kurve auf der Anzeigeeinrichtung 52 der Ansteuereinheit 50 darstellen, die dem elektronisch eingestellten Einschallwinkel β entspricht, bei dem sich das maximale Echosignal Amax ergeben hat. Die AVG-Kurve wurde dabei im Vorfeld der eigentlichen Messung an Referenzfehlern geeicht, die z.B. in Prüfkörper eingebracht sein können. Bei der "Eichung" handelt es sich um eine Kalibrierung der Empfindlichkeit des verwendeten Prüfkopfes. In aller Regel wird das dazu benötigte Referenzecho aus Rückwandechos an den standardisierten sog. "K1-" oder "K2-"Prüfkörpern gewonnen (je nach Frequenz des verwendeten Prüfkopfes). Da es sich in diesen Fällen nicht um ebene Rückwände handelt, muss noch eine (i.d.R. vom Hersteller des Prüfkopfes angegebene) Kreisbogenkorrektur durchgeführt werden. Referenzreflektoren aus dem Bauteil sind hingegen eher selten.

Die auf dem Bildschirm angezeigte AVG-Kurve entspricht einer vorgegeben Ersatzreflektorgröße, die in der Regel der von der Prüfspezifikation vorgegebenen Registriergrenze entspricht. Wird ein Fehler gefunden, dessen Echo die auf dem Bildschirm dargestellte AVG-Kurve überschreitet, wird z.B. automatisch von der Ansteuereinheit 50 (entweder in dB über Registriergrenze oder direkt in Millimetern) die sich ergebene Ersatzreflektorgröße ERS angegeben. In der AVG-Kurve kann der Prüfer also unter Abtragung der Laufzeit des Pulses bis zum aufgefundenen Fehler unmittelbar die Ersatzreflektorgröße ERS des Fehlers ablesen.

In einer weitgehend automatisierten Prüfungsroutine scannt der Prüfer die Oberfläche des Prüflings 100 auf die vorstehend beschriebene Vorgehensweise ab, bis er Echosignale auffindet, die seiner Ansicht nach auf einen Fehler 102 im Volumen des Prüflings 100 zurückgehen. Ggf. nimmt er hier manuell eine gewisse Optimierung des Fehlersignals vor, bevor er die Ansteuer- und Auswerteeinheit 50 der erfindungsgemäßen Vorrichtung 1 auf einen automatischen Vermessungsmodus umstellt. In diesem steuert die Ansteuereinheit 50 den Ultraschallsender 12 so an, dass der Einkoppelpunkt des Schallstrahls in den Prüfling in X-Richtung auf der Oberfläche des Prüflings 100 verschoben wird. Zugleich erfasst die Ansteuereinheit 50 die Amplitude des resultierenden Fehlerechos als Funktion des Einkoppelpunkts und bestimmt die maximale Echoamplitude. Dabei wird der Einschallwinkel β konstant gehalten.

In einem nachfolgenden Verfahrensschritt variiert die Ansteuereinheit 50 den Einschallwinkel, so dass der zu vermessende Fehler 102 im Volumen des Prüflings 100 unter einem anderen Winkel β2 eingeschallt wird. Auch hier variiert die Ansteuereinheit 50 durch geeignete Ansteuerung des Ultraschallsenders 12 den Einkoppelpunkt des ausgesendeten Schallstrahls in den Prüfling, wobei zugleich die sich ergebende Echoamplitude erfasst wird. Auch hier wird die maximale Echoamplitude Amax (β2) beim eingestellten Einschallwinkel β2 ermittelt, d.h. der Prüfer "züchtet" das Echosignal.

Durch Vergleich mit einem oder mehreren prüfkopf- sowie winkelspezifischen AVG-Diagrammen bestimmt dann die Ansteuereinheit 50 der erfindungsgemäßen Vorrichtung automatisch den ERS-Wert des vermessenen Fehlers 102. Hierzu kompensiert die Ansteuereinheit 50 automatisch den Einfluss der elektronischen Variation des Abstrahlwinkels α des Ultraschallsenders 12 auf den Einkoppelpunkt des Ultraschalistrahls in den Prüfling und damit auf die Laufzeit der Ultraschallpulse vom Ultraschallsender 12 bis zum Fehler 102. Weiterhin kompensiert die Ansteuereinheit 50 ebenfalls automatisch den Einfluss der elektronischen Variation des Abstrahlwinkels α des Ultraschallsenders 12 auf die virtuelle Sendergröße, wie vorstehend beschrieben wurde. Auch die Lageänderung des Fokus im Prüfling durch den veränderten Schallweg im Vorlaufkörper kompensiert die Ansteuereinheit 50 automatisch. Schließlich rechnet die Ansteuereinheit 50 automatisiert vom Abstrahlwinkel α auf den Einschallwinkel β um, wobei ggf. auch die Materialeigenschaften des Prüflings berücksichtigt werden.

Im Ergebnis erhält man sowohl aus dem manuell als auch aus dem automatisiert durchgeführten Prüfungsverfahren einen ERS-Wert des im Volumen des Prüflings 100 aufgefundenen Fehlers 102 sowie denjenigen Einschallwinkel β, unter dem sich das maximale Fehlersignal Amax ergibt. Diese Daten können dann protokolliert werden.

Liegen zusätzlich Positionsinformationen zum Prüfkopf vor, so kann das Prüfungsergebnis weiterhin in einem B-Scan, wie er beispielhaft in Figur 6 wiedergegeben ist, oder auch in einem C-Scan bzw. S-Scan auf anschauliche Art und Weise dargestellt werden. So kann ein Balken der Länge L im B-Scan dargestellt werden, dessen X-Position auf der Oberfläche des Prüflings derjenigen Position X₀ entspricht, an der sich rechnerisch der Fehler befindet. In Y-Richtung ist der Balken in der Tiefe Do angeordnet, der der rechnerischen Tiefe des Fehlers im Volumen des Prüflings 100 entspricht. Weiterhin ist die Länge L des Balkens, der den vermessenen Fehler 102 darstellt, unmittelbar mit der im Rahmen des erfindungsgemäßen Prüfverfahrens ermittelten Ersatzreflektorgröße ERS des Fehlers verknüpft. Vorteilhaft ist die Orientierung des Balkens darüber hinaus unmittelbar mit demjenigen Einschallwinkel β korreliert, an dem sich das maximale Echosignal Amax ergibt. Hierzu kann die Längsachse des Balkens gegenüber der X-Achse geneigt dargestellt werden, dergestalt, dass der Balken senkrecht zu der Schallausbreitungsrichtung orientiert ist, die demjenigen Einschallwinkel β entspricht, unter dem sich das maximale Echosignal ergibt. Die Orientierung des Balkens im in Figur 6 dargestellten B-Scan gibt dem Prüfer damit unmittelbar eine Information über die Orientierung des vermessenen Fehlers im Prüfling, die ebenfalls protokolliert und gespeichert werden kann. Dabei wird der in Figur 6 schematisch dargestellte B-Scan dem Prüfer bevorzugt ebenfalls auf der Anzeigeeinrichtung 52 dargestellt, die mit der Ansteuereinheit 50 verbunden ist. Bevorzugt ist die Ansteuereinheit 50 dazu eingerichtet, die gespeicherten Daten an einen PC zu übergeben, wo sie einer weiteren Auswertung unterzogen werden können.

Figur 7 zeigt schließlich einen weiteren B-Scan eines Prüflings 100, aus welchem drei Fehler 102 im Volumen des Prüflings 100 ersichtlich sind. Die Fehler liegen dabei an den Positionen X1, X2 sowie X3. Die an den Positionen X1 und X3 aufgefundenen Fehler 102 zeigen dabei eine starke Abhängigkeit der Echosignale vom Einschallwinkel, d.h. die sich bei einer Veränderung des Einschallwinkels β ergebende Variation der maximalen Fehlerechoamplitude Amax übersteigt einen bestimmten Schwellenwert. Hieraus kann geschlossen werden, dass es sich um eher flächenhaft ausgedehnte Fehler 102 handelt, entsprechend werden diese Fehler im B-Scan der Figur 7 als im Wesentlichen eindimensionale Symbole dargestellt.

Der bei der Position X2 aufgefundene Fehler 102 hingegen zeigt eine im Wesentliche vom Einschallwinkel β unabhängige Echoamplitude, d.h. die sich ergebende Variation der Echoamplitude bleibt unter einer vorbestimmten Schwelle. Hieraus kann auf eine eher gleichförmige dreidimensionale Ausdehnung des Fehlers 102 geschlossen werden, die im B-Scan der Figur 7 durch ein zweidimensionales Fehlersymbol (z.B. eine Kreisscheibe wie gezeigt) dargestellt wird, deren Durchmesser mit der Ersatzreflektorgröße ERS dieses Fehlers korreliert ist.

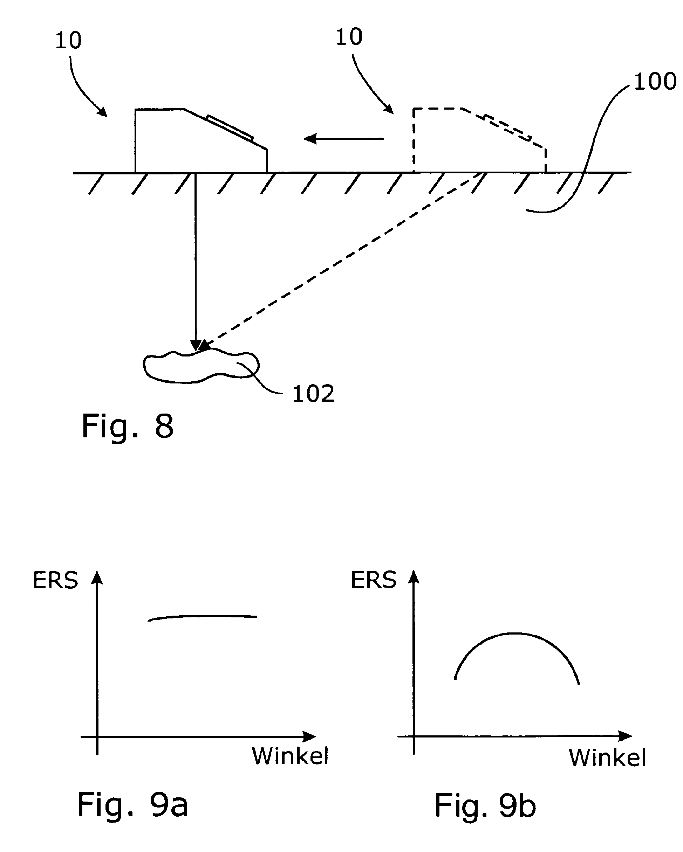

Anhand von Fig. 8 wird nun noch ein neuartiges Verfahren illustriert, welches ebenfalls in der erfindungsgemäßen Vorrichtung 1 implementiert ist. In einem ersten Verfahrensschritt wird der Sendeprüfkopf 10 von der Vorrichtung 1 dergestalt angesteuert, dass er Ultraschallpulse unter einem festen Einfallwinkel β in den Prüfling 100 einschallt. Hat der Prüfer einen Fehler 102 im Volumen des Prüflings 100 aufgefunden, so züchtet er das Fehlersignal, bis die Signalamplitude maximal wird. In einem nächsten Schritt aktiviert der eine "Scan"-Funktion, bei der der Prüfkopf 10 dergestalt von der Vorrichtung 1 angesteuert wird, dass der Einschallwinkel β in den Prüfling 100 elektronisch innerhalb eines vorgebenen Intervalls variiert wird. Die Vorrichtung 100 ist weiterhin dazu eingereichtet, dann aus den unter den verschiedenen Einschallwinkeln β empfangenen Fehlerechos das maximale Fehlerecho und den dazugehörigen Einschallwinkel β Max zu bestimmen. Wird die Position des Sendeprüfkopfs 10 auf der Oberfläche des Prüflings 100 verändert, so ergibt sich ein veränderter Einschallwinkel β, unter welchem das Fehlerecho maximal ist, da ein maximales Fehlerecho i.d.R. dann erhalten wird, wenn der Fehler zentral vom Ultraschallstrahl erfasst wird. Wird wie zuvor beschrieben ein elektronischer Winkel-Scan durchgeführt, so kann die Vorrichtung 1 vollautomatisch denjenigen veränderten Einschallwinkel β auffinden, für den das Fehlerecho maximal wird. Über eine Variation der Position des Sendeprüfkopfs 10 auf der Oberfläche des Prüflings 100 kann mittels des vorstehend beschriebenen Verfahrens automatisiert das maximale Fehlerecho für verschiedene Einschallwinkel β bestimmt werden. Dabei kann die Position des Sendeprüfkopfs 10 auf der Oberfläche des Prüflings 100 einerseits durch eine mechanische Bewegung des Sendeprüfkopfs 10 erfolgen, sie kann aber auch virtuell variiert werden durch Durchführung eines linearen Scans innerhalb der Vielzahl von individuellen Ultraschallwandlern 14 im Ultraschallsender 12 (so genannter "elektronischer linearer Scan").

Ist im Gerät zumindest ein AVG-Diagramm z. B. gemäß Fig. 4 hinterlegt, welches beispielsweise theoretisch berechnet oder mittels praktischer Messungen ermittelt worden sein kann, so kann aus dem Diagramm aus der für einen bestimmten Einschallwinkel *β* ermittelten maximalen Fehlerechoamplitude der ERS-Wert des Fehlers für diesen Winkel bestimmt werden. Gegebenenfalls kann es erforderlich sein, das/die im Gerät hinterlegte AVG-Diagramm/e Prüfkopf- bzw. Material spezifisch zu kalibrieren anhand eines an einem Prüfkörper gewonnenen Referenzechos, welches ggf. unter verschiedenen Einschallwinkeln aufgenommen wird, bevor die eigentliche Prüfung des Prüflings 100 durchgeführt wird. Die AVG-Methode erlaubt damit insbesondere die automatische Kompensation der sich für die unterschiedlichen Einschallwinkel ergebenden Schallwege im Prüfling.

Alternativ kann die Vorrichtung 1 bei der Bestimmung des winkelabhängigen ERS-Werts eines Fehlers 102 im Volumen des Prüflings 100 auch auf die Positionsinformation zurückgreifen, die von der Wegerfassungseinheit 18 geliefert wird. Wie vorstehend beschrieben wird in einem ersten Schritt für einen festen Einschallwinkel β diejenige Position des Sendeprüfkopfs 10 auf der Oberfläche des Prüflings 100 gesucht, für die die Amplitude des Fehlerechos maximal ist. Nachfolgend wird vom Prüfer eine "Trace"-Funktion an der Vorrichtung 1 aktiviert. Wird diese aktiviert, ist die Vorrichtung 1 dazu eingerichtet, bei einer sich verändernden Position des Sendeprüfkopfs 10 mittels geeigneter geometrischer Berechnungen denjenigen Einschallwinkel β am Sendeprüfkopf 10 einzustellen, unter welchem der Fehler 102 im Prüfling auch bei der geänderten Sendeprüfkopfposition zentral vom Ultraschallstrahl erfasst wird. Bei einer Verschiebung des Sendeprüfkopfs 10 auf der Oberfläche des Prüflings 100 wird der aufgefundene Fehler 102 dann unter zur Hilfenahme der erwähnten Trace-Function jederzeit zentral vom Ultraschallstrahl erfasst, so dass das sich ergebene Fehlerecho als maximales Fehlerecho für den eingestellten Einschallwinkel β angesehen werden kann. Es kann also unmittelbar durch Variation der Position des Sendeprüfkopfs 10 auf der Oberfläche des Prüflings 100 das maximale Fehlerecho als Funktion des Einschallwinkels β aufgenommen werden und hieraus der winkelabhängige ERS-Wert des Fehlers 102 als Funktion des Winkels *β* bestimmt werden.

Die Fig. 9a und 9b zeigen schließlich exemplarisch den winkelabhängigen Verlauf des ERS-Werts zweier verschiedener Fehler 102 im Volumen des Prüflings 100. Dabei zeigt Fig. 9a einen Fehler 102, dessen ERS-Wert nur schwach mit dem Einschallwinkel β variiert. Es handelt sich also offenkundig um einen Fehler 102 dessen Ultraschallreflektivität praktisch nicht von demjenigen Winkel abhängt, unter dem der Fehler vom Ultraschallstrahl getroffen wird. Mithin ist davon auszugehen, dass der Fehler zumindest in Bezug auf diejenige Raumrichtung, in der die Position des Sendeprüfkopfs 10 bei der vorstehend genannten Untersuchung variiert wurde, weitgehend isotrop ist.

Fig. 9b hingegen zeigt einen Fehler, dessen ERS-Wert sehr stark vom Einschallwinkel β abhängt. D.h. die Ultraschallreflektivität des Fehlers 102 hängt stark von demjenigen Winkel ab, unter dem der Fehler 102 vom Ultraschallstrahl erfasst wird. Zumindest im Bezug auf diejenige Raumrichtung, in der der Sendeprüfkopf zur Erfassung der Winkelabhängigkeit des ERS-Werts bewegt wurde, ist der zu klassifizierende Fehler 102 als stark anisotrop anzusehen. Es kann sich also beispielsweise um einen Riss handeln, der mit hoher Wahrscheinlichkeit registrierungspflichtig ist, und daher auf geeignete Weise beispielsweise in einem von der Vorrichtung 1 erzeugten B-Scan, C-Scan oder Sektorscan graphisch hervorgehoben sein sollte, wie dies vorstehend bereits erläutert wurde.

## Patentansprüche

1. Verfahren für die zerstörungsfreie Prüfung eines Prüflings (100) mittels Ultraschall, die folgenden Verfahrensschritte umfassend:
a. Einschallen gerichteter Ultraschallpulse in den Prüfling (100) unter einem Einschallwinkel β, wobei der Einschallwinkel β elektronisch eingestellt wird,
b. Aufnehmen von Echosignalen, die aus den in den Prüfling (100) eingeschallten Ultraschallpulsen resultieren,
c. Bestimmen des ERS-Werts ("equivalent reflector size" = Ersatzreflektorgröße) eines Fehlers (102) im Volumen des Prüflings aus Echosignalen, die dem Fehler (102) zugeordnet werden können, für eine Mehrzahl von Einschallwinkeln β, durch Vergleich der Amplitude der Echosignale des Fehlers mit Echosignalen eines modellhaften Referenzfehlers und
d. Erzeugen eines B-Scans, eines C-Scans oder ein Sektor-Scans als graphisch Darstellung des Fehlers (102), wobei diese eine zumindest qualitative Darstellung der Abhängigkeit der bestimmten ERS-Werte des Fehlers vom Einschallwinkel β beinhaltet.

2. Verfahren gemäß Anspruch 1, **dadurch gekennzeichnet, dass** eine Änderung der Position des Einkoppelorts, an welchem die Ultraschallpulse in den Prüfling eingeschallt werden, erfasst wird.

3. Verfahren gemäß Anspruch 1, **dadurch gekennzeichnet, dass** bei der Berechnung des ERS-Werts des Fehlers (102) der Einfluss der elektronischen Einstellung des Einschallwinkels β auf den zu ermittelnden ERS-Wert des Fehlers (102) automatisch kompensiert wird.

4. Verfahren gemäß Anspruch 1, **dadurch gekennzeichnet, dass**
a. zum Einschallen gerichteter Ultraschallpulse ein Sendeprüfkopf (10) verwendet wird, dessen Ultraschallsender (12) eine Mehrzahl von unabhängig ansteuerbaren Ultraschallwandlern (14) umfasst, und
b. zum elektronischen Einstellen des Einschallwinkels β die Mehrzahl von Ultraschallwandlern (14) individuell phasengenau angesteuert wird, dergestalt dass der Abstrahlwinkel α des Ultraschallsenders (12) variiert wird.

5. Verfahren gemäß Anspruch 1, **dadurch gekennzeichnet, dass** zur Bestimmung des ERS-Werts des Fehlers aus den Echosignalen zumindest ein AVG-Diagramm (AVG = Abstand, Verstärkung, (Fehler-)Größe) verwendet wird.

6. Verfahren gemäß Anspruch 5, **dadurch gekennzeichnet, dass** das AVG-Diagramm spezifisch für die Quelle der Ultraschallpulse ist.

7. Verfahren gemäß Anspruch 5, **dadurch gekennzeichnet, dass** das AVG-Diagramm eine Abhängigkeit vom Einschallwinkel β aufweist.

8. Verfahren gemäß Anspruch 5, **dadurch gekennzeichnet, dass** das AVG-Diagramm unabhängig vom Einschallwinkel β ist und der Einfluss des Einschallwinkels β auf die registrierte Echoamplitude rechnerisch kompensiert wird.

9. Verfahren gemäß Anspruch 1, **dadurch gekennzeichnet, dass** im Rahmen der Prüfung des Prüflings (100) zumindest einmal ein Kalibrationsschritt durchlaufen wird, bei welchem die Amplitude eines von einem Referenzfehler hervorgerufenen Echos erfasst wird.

10. Verfahren gemäß Anspruch 9, **dadurch gekennzeichnet, dass** es sich bei dem Referenzfehler um eine Rückwand oder um eine Prüfbohrung eines Prüfkörpers handelt.

11. Verfahren gemäß Anspruch 9, **dadurch gekennzeichnet, dass** der Kalibrationsschritt für eine Mehrzahl von Einschallwinkeln β durchgeführt wird.

12. Verfahren gemäß Anspruch 1, **dadurch gekennzeichnet, dass** in der erzeugten graphische Darstellung des Fehlers (102) zumindest eines der folgenden Charakteristika des Fehlers (102) dargestellt wird:
a. Einschallwinkel β, unter dem der ERS-Wert des Fehlers (102) maximal ist,
b. Information darüber, ob der ERS-Wert des Fehlers (102) über verschiedene Einschallwinkel β im Wesentlichen konstant ist.

13. Verfahren gemäß Anspruch 12, **dadurch gekennzeichnet, dass**
a. der Fehler (102) in der erzeugten Darstellung als Balken dargestellt wird, und
b. zumindest einer der folgenden Anzeigeparameter zur Codierung der dazustellenden Fehlercharakteristika verwendet wird:
i. Farbe,
ii. Winkel der Längsachse des Balkens gegen die Oberfläche des Prüflings (100),
iii. Geometrische Grundform des Balkens.

14. Vorrichtung (1) für die zerstörungsfreie Prüfung eines Prüflings (100) mittels Ultraschall, mit
a. einem Sendeprüfkopf (10) mit einem Ultraschallsender (12), der dazu eingerichtet ist, gerichtete Ultraschallpulse unter einem Einschallwinkel β in den Prüfling (100) einzuschallen,
b. einem Ultraschallempfänger (40), der dazu eingerichtet ist, Echosignale der in den Prüfling (100) eingeschallten Ultraschallpulse aufzunehmen,
c. einer Ansteuer- und Auswerteeinheit (50), die dazu eingerichtet ist,
i. den Ultraschallsender (12) des Sendeprüfkopfs (10) so anzusteuern, dass der Ultraschallsender (12) zur Aussendung von Ultraschallpulsen angeregt wird,
ii. die vom Ultraschallempfänger (40) aufgenommenen Echosignale zu verarbeiten, und
iii. aus Echosignalen, die einem Fehler (102) im Volumen des Prüflings (100) zugeordnet werden können, einen ERS-Wert ("equivalent reflector size" = Ersatzreflektorgröße) des Fehlers (102) zu bestimmen,
wobei
d. der Ultraschallsender (12) eine Mehrzahl von unabhängig ansteuerbaren Ultraschallwandlern (14) umfasst, und
e. die Ansteuer- und Auswerteeinheit (50) dazu eingerichtet ist:
i. die Mehrzahl von Ultraschallwandlern (14) individuell phasengenau so anzusteuern, dass der Abstrahlwinkel α des Ultraschallsenders (12) und damit der Einschallwinkel β in den Prüfling (100) elektronisch verstellt werden kann,
ii. aus Echosignalen, die dem Fehler (102) zugeordnet werden können, den ERS-Werts eines Fehlers (102) im Volumen des Prüflings für eine Mehrzahl von Einschallwinkeln β zu bestimmen durch vergleich der Amplitude der Echosignale des Fehlers mit Echosignalen eines modellhaften Referenzfehlers, und
einen B-Scan, C-Scan oder einen Sektor-Scan als graphische Darstellung des Fehlers (102) zu erzeugen, wobei diese eine zumindest qualitative Darstellung der Abhängigkeit der bestimmten ERS-Werte des Fehlers vom Einschallwinkel β beinhaltet.

15. Vorrichtung (1) gemäß Anspruch 14, **dadurch gekennzeichnet, dass** die Ansteuer- und Auswerteeinheit (50) dazu eingerichtet ist, bei der Berechnung des ERS-Werts des Fehlers (102) den Einfluss der elektronischen Einstellung des Einschallwinkels β auf den zu ermittelnden ERS-Wert des Fehlers (102) automatisch zu kompensieren.

16. Vorrichtung (1) gemäß Anspruch 14, **dadurch gekennzeichnet, dass** die Vorrichtung weiterhin eine Wegerfassungseinheit (18) umfasst, die dazu eingerichtet ist, eine Änderung der Position des Prüfkopfs (10) auf der Oberfläche des Prüflings (100) zu erfassen.

17. Vorrichtung (1) gemäß Anspruch 14, **dadurch gekennzeichnet, dass** im erzeugten Scan ein Fehler (102) durch einen Balken symbolisiert wird, dessen Ausdehnung entlang seiner Längsachse mit dem ERS-Wert des Fehlers (102) korreliert.

18. Vorrichtung (1) gemäß Anspruch 14, **dadurch gekennzeichnet, dass** im erzeugten Scan zumindest eines der folgenden weiteren Charakteristika eines Fehlers (102) dargestellt wird:
a. relative Amplitude des Fehlerechos,
b. Einschallwinkel β, unter dem der ERS-Wert des Fehlers (102) maximal ist,
c. Relative Fehlergröße,
d. Bein, aus welchem das Fehlerecho herrührt, und
e. Information darüber, ob der ERS-Wert des Fehlers (102) über verschiedene Einschallwinkel β im Wesentlichen konstant ist.

19. Vorrichtung (1) gemäß Anspruch 18, **dadurch gekennzeichnet, dass** zumindest einer der folgenden Anzeigeparameter zur Codierung der dazustellenden weiteren Fehlercharakteristika verwendet wird:
a. Farbe,
b. Abmessung des Balkens quer zu seiner Längsachse,
c. Winkel des Längsachse des Balkens gegen die Oberfläche des Prüflings,
d. Geometrische Grundform des Balkens.

## Claims

1. Method for the non-destructive testing of a test object (100) by means of ultrasound, comprising the following process steps:
a. insonification of directed ultrasonic pulses into the test object (100) at an insonification angle β, wherein the insonification angle β is adjusted electronically,
b. recording of echo signals that result from the ultrasonic pulses insonified into the test object (100),
c. determining an ERS value ("equivalent reflector size") of a flaw (102) in the test object volume from echo signals (102) that can be ascribed to the flaw (102), for a plurality of insonification angles β, by comparing the amplitude of the echo signals of the flaw with echo signals of a model reference flaw, and
d. generating a B scan, C scan or sector scan as a graphical representation of the flaw (102), wherein the latter contains an at least qualitative representation of the dependence of the determined ERS values of the flaw on the insonification angle β.

2. Method according to claim 1, **characterised in that** a change of the position of the coupling location at which the ultrasonic pulses are insonified into the test object is detected.

3. Method according to claim 1, **characterised in that** the influence of the electronic adjustment of the insonification angle β on the ERS value of the flaw (102) to be determined is automatically compensated in the calculation of the ERS value of the flaw (102).

4. Method according to claim 1, **characterised in that**
a. for the insonification of directed ultrasonic pulses, a transmitting test probe (10) is used whose ultrasonic transmitter (12) comprises a plurality of independently controllable ultrasonic transducers (14), and
b. for the electronic adjustment of the insonification angle β, the plurality of ultrasonic transducers (14) is controlled individually and phase-accurately in such a way that the emission angle α of the ultrasonic transmitter (12) is varied.

5. Method according to claim 1, **characterised in that** at least one DGS diagram (DGS = distance, gain, (flaw) size)) is used to determine the ERS value of the flaw from the echo signals.

6. Method according to claim 5, **characterised in that** the DGS diagram is specific to the source of the ultrasonic pulses.

7. Method according to claim 5, **characterised in that** the DGS diagram has a dependence on the insonification angle β.

8. Method according to claim 5, **characterised in that** the DGS diagram is independent from the insonification angle β and the influence of the insonification angle β on the registered echo amplitude is compensated by calculation.

9. Method according to claim 1, **characterised in that**, within the context of the testing of the test object (100), a calibration step is carried out at least once in which the amplitude of an echo caused by a reference flaw is detected.

10. Method according to claim 9, **characterised in that** the reference flaw is a back face or a test bore of a test piece.

11. Method according to claim 9, **characterised in that** the calibration step is carried out for a plurality of insonification angles β.

12. Method according to claim 1, **characterised in that** at least one of the following characteristics of the flaw (102) is shown in the generated graphic representation of the flaw (102):
a. insonification angle β at which the ERS value of the flaw (102) is at maximum,
b. information on whether the ERS value of the flaw (102) is substantially constant over different insonification angles β.

13. Method according to claim 12, **characterised in that**
a. the flaw (102) is shown as a bar in the generated representation, and
b. at least one of the following display parameters is used for coding the flaw characteristics to be shown:
i. colour,
ii. angle of the longitudinal axis of the bar relative to the surface of the test object (100),
iii. geometric basic form of the bar.

14. Device (1) for the non-destructive testing of a test object (100) by means of ultrasound, comprising
a. a transmitting test probe (10) with an ultrasonic transmitter (12), which is configured to insonify directed ultrasonic pulses at an insonification angle β into the test object (100),
b. an ultrasonic receiver (40), which is configured to record echo signals of the ultrasonic pulses insonified into the test object (100),
c. a control and evaluation unit (50), which is configured
i. to control the ultrasonic transmitter (12) of the transmitting test probe (10) in such a way that the ultrasonic transmitter (12) is excited to emit ultrasonic pulses,
ii. to process the echo signals recorded by the ultrasonic receiver (40), and
iii. to determine an ERS value ("equivalent reflector size") of the flaw (102) from echo signals that can be ascribed to a flaw (102) in the test object (100) volume,
wherein
d. the ultrasonic transmitter (12) has a plurality of ultrasonic transducers (14) that can be controlled independently, and
e. the control and evaluation unit (50) is configured:
i. to control the plurality of ultrasonic transducers (14) individually and phase-accurately such that the emission angle α of the ultrasonic transmitter (12) and thus, the insonification angle β into the test object (100), can be adjusted electronically,
ii. to determine the ERS value of a flaw (102) in the test object volume from echo signals that can be ascribed to the flaw (102), for a plurality of insonification angles β, by comparing the amplitude of the echo signals of the flaw with echo signals of a model reference flaw, and
to generate a B scan, C scan or sector scan as a graphical representation of the flaw (102), wherein the latter contains an at least qualitative representation of the dependence of the determined ERS values of the flaw on the insonification angle β.

15. Device (1) according to claim 14, **characterised in that** the control and evaluation unit (50) is configured to automatically compensate, during the calculation of the ERS value of the flaw (102), for the influence of the electronic adjustment of the insonification angle β on the ERS value of the flaw (102) to be determined.

16. Device (1) according to claim 14, **characterised in that** the device further comprises a path detection unit (18), which is configured to detect a change of the position of the test probe (10) on the surface of the test object (100).

17. Device (1) according to claim 14, **characterised in that** a flaw (102) is symbolised by a bar in the generated scan, the extension of which along its longitudinal axis correlates with the ERS value of the flaw (102).

18. Device (1) according to claim 14, **characterised in that** at least one of the following further characteristics of a flaw (102) is depicted in the generated scan:
a. relative amplitude of the flaw echo,
b. insonification angle β at which the ERS value of the flaw (102) is at maximum,
c. relative flaw size,
d. leg from which the flaw echo originates, and
e. information on whether the ERS value of the flaw (102) is substantially constant over different insonification angles β.

19. Device (1) according to claim 18, **characterised in that** at least one of the following display parameters is used for coding the further flaw characteristics to be shown:
a. colour,
b. dimension of the bar transverse to its longitudinal axis,
c. angle of the longitudinal axis of the bar relative to the surface of the test object,
d. geometric basic form of the bar.

## Revendications

1. Procédé pour le contrôle non destructif par ultrasons d'un échantillon (100), comprenant les étapes de procédé suivantes :
a. émission d'impulsions ultrasonores dirigées, à un angle d'incidence β, dans ledit échantillon (100), ledit angle d'incidence β étant réglé de façon électronique,
b. réception de signaux d'écho qui résultent des impulsions ultrasonores émises dans ledit échantillon (100),
c. détermination de la valeur ERS (« equivalent reflector size » = taille de réflecteur équivalent) d'un défaut (102) dans le volume de l'échantillon à partir de signaux d'écho qui peuvent être associés au défaut (102), pour une pluralité d'angles d'incidence β, en comparant l'amplitude des signaux d'écho du défaut à des signaux d'écho d'un défaut de référence modèle, et
d. génération d'un B-scan, d'un C-scan ou d'un scan de secteur en tant que représentation graphique du défaut (102), celle-ci comprenant une représentation au moins qualitative de la dépendance des valeurs ERS déterminées du défaut, de l'angle d'incidence β.

2. Procédé selon la revendication 1, **caractérisé par le fait qu'**une modification de la position du lieu de couplage où les impulsions ultrasonores sont émises dans l'échantillon est détectée.

3. Procédé selon la revendication 1, **caractérisé par le fait que**, lors du calcul de la valeur ERS du défaut (102), l'influence du réglage électronique de l'angle d'incidence β sur la valeur ERS à déterminer du défaut (102) est compensée automatiquement.

4. Procédé selon la revendication 1, **caractérisé par le fait que**
a. pour l'émission d'impulsions ultrasonores dirigées, on utilise un palpeur d'émission (10) dont l'émetteur d'ultrasons (12) comprend une pluralité de transducteurs ultrasonores (14) aptes à être commandés indépendamment, et
b. pour le réglage électronique de l'angle d'incidence β, ladite pluralité de transducteurs ultrasonores (14) est commandée de façon individuelle à précision de phase, de manière à ce que l'angle de réflexion α de l'émetteur d'ultrasons (12) soit varié.

5. Procédé selon la revendication 1, **caractérisé par le fait que**, pour déterminer la valeur ERS du défaut à partir des signaux d'écho, on utilise au moins un diagramme AVG (AVG signifiant « distance - gain - taille (de défaut) »).

6. Procédé selon la revendication 5, **caractérisé par le fait que** le diagramme AVG est spécifique pour la source des impulsions ultrasonores.

7. Procédé selon la revendication 5, **caractérisé par le fait que** le diagramme AVG présente une dépendance de l'angle d'incidence β.

8. Procédé selon la revendication 5, **caractérisé par le fait que** le diagramme AVG est indépendant de l'angle d'incidence β et que l'influence de l'angle d'incidence β sur l'amplitude d'écho enregistrée est compensée par calcul.

9. Procédé selon la revendication 1, **caractérisé par le fait que**, dans le cadre du contrôle de l'échantillon (100), une étape de calibrage est réalisée une fois au moins, dans laquelle est saisie l'amplitude d'un écho causé par un défaut de référence.

10. Procédé selon la revendication 9, **caractérisé par le fait que** ledit défaut de référence est une paroi arrière ou un perçage de contrôle d'un échantillon.

11. Procédé selon la revendication 9, **caractérisé par le fait que** ladite étape de calibrage est réalisée pour une pluralité d'angles d'incidence β.

12. Procédé selon la revendication 1, **caractérisé par le fait que**, dans la représentation graphique produite du défaut (102), est représentée l'une au moins des caractéristiques suivantes du défaut (102) :
a. l'angle d'incidence β auquel la valeur ERS du défaut (102) est maximale,
b. l'information de savoir si la valeur ERS du défaut (102) est pour l'essentiel constante sur différents angles d'incidence β.

13. Procédé selon la revendication 12, **caractérisé par le fait que**
a. le défaut (102) est représenté en tant que barre dans la représentation produite, et que,
b. pour le codage des caractéristiques de défaut à représenter, on utilise l'un au moins des paramètres d'affichage suivants :
i. la couleur,
ii. l'angle de l'axe longitudinal de la barre par rapport à la surface de l'échantillon (100),
iii. la forme de base géométrique de la barre.

14. Dispositif (1) pour le contrôle non destructif par ultrasons d'un échantillon (100), comprenant
a. un palpeur d'émission (10) ayant un émetteur d'ultrasons (12) qui est adapté pour émettre des impulsions ultrasonores dirigées, à un angle d'incidence β, dans ledit échantillon (100),
b. un récepteur d'ultrasons (40) qui est adapté pour recevoir des signaux d'écho des impulsions ultrasonores émises dans ledit échantillon (100),
c. une unité de commande et d'évaluation (50) qui est adaptée pour
i commander ledit émetteur d'ultrasons (12) du palpeur d'émission (10) de manière à ce que l'émetteur d'ultrasons (12) soit incité à émettre des impulsions ultrasonores,
ii traiter les signaux d'écho reçus par ledit récepteur d'ultrasons (40), et pour
iii déterminer, à partir de signaux d'écho qui peuvent être associés à un défaut (102) dans le volume de l'échantillon (100), une valeur ERS (« equivalent reflector size » = taille de réflecteur équivalent) dudit défaut (102),
dans lequel
d. ledit émetteur d'ultrasons (12) comprend une pluralité de transducteurs ultrasonores (14) aptes à être commandés indépendamment, et
e. ladite unité de commande et d'évaluation (50) est adaptée pour :
i. commander la pluralité de transducteurs ultrasonores (14) de façon individuelle à précision de phase, de manière à ce que l'angle de réflexion α de l'émetteur d'ultrasons (12) et ainsi l'angle d'incidence β dans ledit échantillon (100) puisse être réglé de façon électronique,
ii. déterminer, à partir de signaux d'écho qui peuvent être associés au défaut (102), la valeur ERS d'un défaut (102) dans le volume de l'échantillon pour une pluralité d'angles d'incidence β, en comparant l'amplitude des signaux d'écho du défaut à des signaux d'écho d'un défaut de référence modèle, et pour
générer un B-scan, un C-scan ou un scan de secteur en tant que représentation graphique du défaut (102), celle-ci comprenant une représentation au moins qualitative de la dépendance des valeurs ERS déterminées du défaut, de l'angle d'incidence β.

15. Dispositif (1) selon la revendication 14, **caractérisé par le fait que** ladite unité de commande et d'évaluation (50) est adaptée pour compenser automatiquement, lors du calcul de la valeur ERS du défaut (102), l'influence du réglage électronique de l'angle d'incidence β sur la valeur ERS à déterminer du défaut (102).

16. Dispositif (1) selon la revendication 14, **caractérisé par le fait que** ledit dispositif comprend en outre une unité de détection de déplacement (18) qui est adaptée pour détecter une modification de la position du palpeur (10) sur la surface de l'échantillon (100).

17. Dispositif (1) selon la revendication 14, **caractérisé par le fait que**, dans le scan généré, un défaut (102) est symbolisé par une barre dont l'extension suivant son axe longitudinal est en corrélation avec la valeur ERS du défaut (102).

18. Dispositif (1) selon la revendication 14, **caractérisé par le fait que**, dans le scan généré, est représentée l'une au moins des autres caractéristiques suivantes d'un défaut (102) :
a. l'amplitude relative de l'écho du défaut,
b. l'angle d'incidence β auquel la valeur ERS du défaut (102) est maximale,
c. la taille relative du défaut,
d. la branche d'où provient l'écho du défaut et
e. l'information de savoir si la valeur ERS du défaut (102) est pour l'essentiel constante sur différents angles d'incidence β.

19. Dispositif (1) selon la revendication 18, **caractérisé par le fait que**, pour le codage des autres caractéristiques de défaut à représenter, on utilise l'un au moins des paramètres d'affichage suivants :
a. la couleur,
b. la dimension de la barre, transversale à son axe longitudinal,
c. l'angle de l'axe longitudinal de la barre par rapport à la surface de l'échantillon,
d. la forme de base géométrique de la barre.
